# EUROPÄISCHE PATENTSCHRIFT

(11) **EP 2 960 545 B1**
(45) Veröffentlichungstag und Bekanntmachung des Hinweises auf die Patenterteilung: **22.05.2019**
(21) Anmeldenummer: 15001726.7
(22) Anmeldetag: 11.06.2015
(51) Int. Cl.: F16G 13/20

(54) **RÜCKENSTEIFE SCHUBKETTE**
RIGID-SPINED PUSH CHAIN
CHAÎNE DE POUSSÉE AUTOPORTANTE

(30) Priorität: 12.06.2014 DE 202014004827 U
(43) Veröffentlichungstag der Anmeldung: 30.12.2015
(73) Patentinhaber: K+G Pneumatik GmbH, 52249 Eschweiler (DE)
(72) Erfinder: Kohler, Franz, 52249 Eschweiler (DE); Maul, Hans-Erich, 52068 Aachen (DE); Urbansky, Christof, 52379 Langerwehe (DE)
(74) Vertreter: Tergau & Walkenhorst Patentanwälte PartGmbB

(56) Entgegenhaltungen:
- AU-B2- 521 606
- AU-B2- 596 608
- AU-B2- 627 193
- DE-C- 650 777
- GB-A- 2 159 600
- JP-A- H06 286 834
- JP-A- 2011 251 795
- US-A- 5 156 574
- US-A1- 2014 109 701

## Beschreibung

Die Erfindung betrifft eine rückensteife Schubkette nach dem Oberbegriff des Anspruchs 1.

Derartige rückensteife Schubketten sind bereits bekannt, um Schubkräfte linear ohne aufwändige Führung zu übertragen, wobei ein Abknicken der Schubkette in einer Richtung vermieden werden soll. Andererseits sollen solche Schubketten in entgegengesetzter Richtung abgewinkelt werden, insbesondere um in ein antreibendes Kettenrad einzugreifen.

Solche Schubketten werden beispielsweise zur Betätigung von Fenstern, Klappen und Lichtkuppeln in Gebäuden eingesetzt.

Zur Verwendung in zumindest teilweise ungeführten Schubkettenantrieben wurden in der Vergangenheit zwei verschiedene Kettenglieder für erforderlich gehalten, die mittels Verbindungselementen, insbesondere Bolzen, miteinander verbunden sind (EP 0936 378 A1). Die verschiedenen Kettenglieder sind dabei abwechselnd angeordnet. Insbesondere ist ein solches Kettenglied als U-förmig gebogener Bügel ausgebildet und ein mit diesem zusammenwirkendes anderes Kettenglied kann als ebene Innenlasche geformt sein. Der Bügel kann durch Stanzen und Biegen aus einer flächigen Metallplatte aus einem Stück gefertigt werden. Er weist in Kantenbereichen Abrundungen auf, die ein Abknicken der Kette während einer Drehbewegung um ein Kettenrad ermöglichen. Weiterhin weist der Bügel außer Stützflächen an beiden transversalen Stirnseiten eines Scheitelbereichs seitliche Stützflächen an Schenkeln des Bügels zur Aufnahme der Druckkräfte bei einer Schubübertragung auf. Die Innenlaschen können ebenso wie die Bügel Bohrungen für Verbindungen mit Bolzen aufweisen und außerdem Ansätze aufweisen, aus denen jeweils ein nasenförmiger Steg ausgeformt ist. Der nasenförmige Steg kann in sich gegenüberliegende Aussparungen zweier benachbarter Bügel eingreifen und zur Aufnahme von Stützkräften genutzt werden. Diese Ausführungsform gilt als relativ aufwendig. Insbesondere kompliziert die Innenlasche die Fertigung der Schubkette.

Ähnlich nachteilig ist ein Schubkettenantrieb zur Verstellung eines Fensters bzw. einer Lichtkuppel mit einer rückensteifen Schubkette, die U-förmig gebogene Laschen und diese verbindende Zwischenstücke umfasst, die mittels Bolzen einseitig schwenkbar miteinander verbunden sind (US 4 521 993). Stirnseitige Stützflächen der U-förmig gebogenen Laschen gelangen im geradlinigen Zustand der Schubkette an korrespondierenden Flächen der Zwischenstücke zur Anlage.

Eine wahlweise in eine von zwei entgegengesetzten Richtungen kraftübertragende Kette gem. der US2014/109701A1, von der die rückensteifen Schubkette nach dem Oberbegriff des Anspruchs 1 ausgeht, umfasst mit Stiften als Verbindungselemente aufeinanderfolgend schwenkbar verbundene Kettenglieder, die einteilig, zumindest in einem Längsschnitt im Querschnitt U-förmig mit einem Rückensteg ausgebildet sind, von dem rechtwinklig zwei seitliche, zueinander im Wesentlichen parallele Schenkel abstehen, die über den Rückensteg verbunden sind, und deren stirnseitige Abschnitte an ihren zu dem Rückensteg abgewandten Enden abgerundete Teilabschnitte aufweisen, so dass die abgerundeten Teilabschnitte der Schenkel gegenseitig abgewinkelte Positionen benachbarter Kettenglieder gestatten. Die aufeinanderfolgend verbundenen Kettenglieder bestehen aus jeweils einem gleich geformten Teil. Die beiden zueinander im Wesentlichen parallelen Schenkel weisen jeweils zwei unter Einschluss je einer Stufe in Längsrichtung des Kettenglieds nebeneinander angeordnete erste Verbindungsabschnitte, durch die sich ein Langloch erstreckt, und zweite Verbindungsabschnitte mit je einem Rundloch auf, an denen gegenseitige Abstände der beiden zueinander im Wesentlichen parallelen Schenkel unterschiedlich sind. Die beiden zueinander im Wesentlichen parallelen Schenkel sind über den Rückensteg im Querschnitt U-förmig miteinander verbunden. An ihren zweiten Verbindungsabschnitten können die beiden parallelen Schenkel als gabelförmige Schenkelabschnitte angesehen werden. Jede Stufe der beiden zueinander im Wesentlichen parallelen Schenkel weist jeweils eine erste Stufenstutzfläche bzw. Anlagenkante auf einer Innenseite der Stufe auf, und eine zweite Stufenstutzfläche bzw. Anlagenkante auf einer Außenseite der Stufe. Die Kettenglieder sind an Stiften miteinander schwenkbar und in Längsrichtung der Kette zueinander zusammendrückbar oder auf Abstand zueinander ziehbar. Hierzu ist ein Stift an einem Ende eines Kettenglieds in das Rundloch eingelassen, um das das Kettenglied nur schwenkbar ist. An dem entgegengesetzten Ende des Kettenglieds ist das Langloch zur Aufnahme eines Stifts vorgesehen, so dass ein hierin aufgenommener Stift an einem Ende des nächsten Kettenglieds in dem Langloch verschiebbar ist. Weiterhin weisen die Kettenglieder dieser Kette an den abgerundeten Teilabschnitten der zueinander parallelen Schenkel jeweils einen ersten Eingriffsabschnitt auf, der sich stufenförmig über den abgerundeten Teilabschnitt erhebt. An dem entgegengesetzten Verbindungsabschnitt des jeweils benachbarten Kettenglieds entspricht dieser stufenförmigen Erhebung ein als Nut ausgebildeter Eingriffsabschnitt, in den die stufenförmige Erhebung bei grader Kette eingreifen kann. Zum gegenseitigen Abwinkeln benachbarter Kettenglieder ist die stufenförmige Erhebung aus dem Eingriffsabschnitt des benachbarten Kettenglieds herausgezogen, wodurch der Abstand der benachbarten Kettenglieder entsprechend groß ist, so dass sich jeweils ein abgerundeter Teilabschnitt neben der stufenförmigen Erhebung an der Stirnseite des Schenkels nicht an der Stirnseite eines Schenkels des benachbarten Kettenglieds abstützen kann. In diesem Zustand der Kettenglieder entfallen also zwei seitliche Abstützungen an den parallelen Schenkeln der Kettenglieder. Auch an dem entgegengesetzten Ende des Kettenglieds, in dessen Langloch der Stift eines benachbarten Kettenglieds verschiebbar ist, liegt eine Abrundung eines stirnseitigen Abschnitts nicht mehr an den inneren Stufenstützflächen des benachbarten Kettenglieds an. Nachteilig bei dieser Kette ist auch der Verschleiß, den der verschiebbare Stift dem Langloch hervorruft und vor allem bei der stufenförmigen Erhebung neben dem abgerundeten Teilabschnitt jeweils eines Schenkels in dem als Nut ausgebildeten Eingriffsabschnitt eines benachbarten Kettenglieds auftritt.

Zum Stand der Technik (DE 650777 C) gehören ferner sich versteifende Ketten eines Lastenhebers, von denen jede aus mindestens zwei Reihen von unterschiedlichen Kettengliedern besteht, wobei ein Kettenglied der einen Reihe mit zwei Kettengliedern der anderen Reihe durch Gelenkbolzen verbunden ist. Die Kettenglieder der beiden Reihen sind unterschiedlich dimensioniert. Sie sind einteilig und in einem Längsabschnitt im Querschnitt U-förmig mit einem Rückensteg ausgebildet, von dem rechtwinklig zwei seitliche zueinander im wesentlich parallele Schenkel abstehen, die über den Rückensteg verbunden sind. Stirnseitige Abschnitte der Schenkel weisen an ihren zu dem Rückensteg abgewandten Enden abgerundete Teilabschnitte auf. Die inneren Kettenglieder und die äußeren Kettenglieder können sich jeweils untereinander abstützen. Die unterschiedlich dimensionierten Kettenglieder erfordern jedoch einen entsprechenden Herstellungsaufwand.

Gemäß der AU 521606 B2 besteht eine Schubkette aus untereinander gleichen Kettengliedern, welche einteilig, zumindest in einem Längsabschnitt im Querschnitt U-förmig, mit einem gewölbten Rückensteg ausgebildet sind, von dem rechtwinklig zwei seitliche zueinander im Wesentlichen parallele Schenkel abstehen, die über den Rückensteg verbunden sind. Stirnseitige Abschnitte der Schenkel sind teilweise abgerundet, um eine Schwenkbarkeit zu erlauben, jedoch erfolgen über diese Schenkel keine seitlichen Abstützungen. Der annähernd sphärisch gewölbte Rückensteg kann eine entsprechende aufwendige Gestaltung des Presswerkzeugs erfordern.

Bei der aus der AU 927193 B1 bekannten Schubkette sind aufeinanderfolgend unterschiedliche Kettenglieder miteinander verbunden, die im Querschnitt U-förmig mit einem Rückensteg ausgebildet sind, von dem rechtwinklig zwei seitliche, zueinander im Wesentlichen parallele Schenkel abstehen, die über den Rückensteg verbunden sind. Bei einem Typ der Kettenglieder sind stirnseitige Abschnitte der Schenkel an ihren zu dem Rückensteg abgewandten Ende mit abgerundeten Teilabschnitten versehen. Die Abrundungen der Teilabschnitte sind lediglich zum Freihalten der Kettenglieder bei Umlenkung, z. B. an einem Antriebsritzel vorgesehen. Zum gegenseitigen Abstützen der Kettenglieder dienen lediglich deren Rücken.

Eine bekannte Förderkette (JP H06286834A) besteht aus gleichen Kettengliedern mit einem Rückensteg, aus dem eine Verbindungsnase in Längsrichtung der Kette herausragt. Stützflächen dieses Kettenglieds sind ausschließlich an dem Rückensteg quer sowie an der Verbindungsnase angeordnet. Dieses Kettenglied lässt sich nicht aus Blech durch Stanzen und Biegen herstellen.

Die aus der JP 211251795A bekannte Transportkette, die mit einer Seitenplatine einer Palette transportiert, steht einer rückensteifen Antriebskette ferner. Sie ähnelt der obigen Transportkette gemäß JP H062866834A und weist jener gegenüber einen breiteren Vorsprung die Verbindungsnase der oben genannten Kette auf.

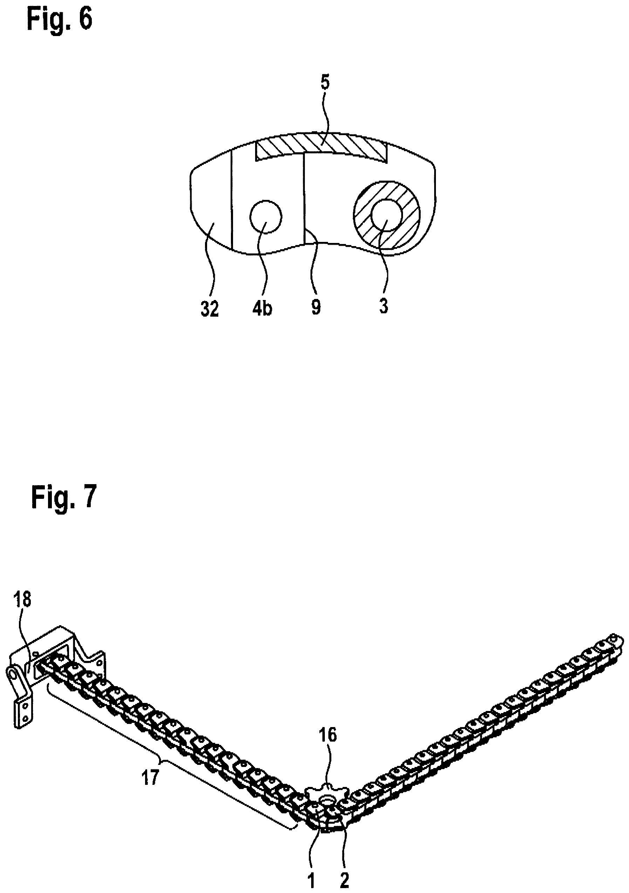

In der GB2159600A ist eine Schubkette offenbart, in der die aufeinander folgend verbundenen Kettenglieder einteilig, in einem Längsabschnitt im Querschnitt U-förmig mit einem Rückensteg ausgebildet sind, von dem rechtwinklig zwei seitliche, zueinander parallele Schenkel abstehen, die über den Rückensteg verbunden sind. Stirnseitige Abschnitte der Schenkel sind an ihren zu dem Rückensteg abgewandten Enden abgerundet. Die Schenkel sind in dem Bereich des Rückenstegs zickzackförmig gebogen, so dass beide parallele Enden der Schenkel in gleicher Weise versetzt sind. Die Rückenstege sind so dimensioniert, dass sie sich bei gradlinig gestreckter Kette an ihren Stirnseiten gegeneinander abstützen können, und senkrecht zur Längsrichtung eines Kettenglieds gekrümmt (siehe Figur 6), so dass die Schenkel bei der Herstellung des Kettengliedes nicht ohne weiteres von dem Rückensteg abgebogen werden können. Stützflächen sind nur die quer angeordneten Rückenflächen eines Kettenglieds.

Gattungsgemäß ferner stehen bekannte Schubketten mit Kettengliedern ohne Rückensteife, die lediglich mit seitlichen Blechlaschen ausgebildet sind, welche an Verbindungsstellen übereinander liegend mit Abstandsrollen und Nieten verbunden sind. Bei dieser Ausbildung der Schubketten kann die Biege- und Knicksteifigkeit nur über die seitlichen Blechlaschen erreicht werden.

Der vorliegenden Erfindung liegt die Aufgabe zugrunde, eine rückensteife Schubkette zu schaffen, die fertigungsgünstig herstellbar ist und gleichwohl eine hohe Biege- und Knicksteifigkeit aufweist.

Ausgehend von einer rückensteifen Schubkette,
umfassend miteinander mittels Verbindungselementen wie Bolzen, Stifte oder Nieten aufeinander folgend schwenkbar verbundene Kettenglieder, wobei im Wesentlichen sämtliche aufeinander folgend verbundene Kettenglieder einteilig, zumindest in einem Längsabschnitt im Querschnitt U-förmig mit einem Rückensteg ausgebildet sind, von dem rechtwinklig zwei seitliche, zueinander im Wesentlichen parallele Schenkel abstehen, die über den Rückensteg verbunden sind und deren stirnseitige Abschnitte an ihren zu dem Rückensteg abgewandten Enden abgerundete Teil-Abschnitte aufweisen, so dass die abgerundeten Teil-Abschnitte der Schenkel gegenseitig abgewinkelte Positionen benachbarter Kettenglieder gestatten,
wobei die aufeinander folgend verbundenen Kettenglieder aus jeweils einem gleich geformten Teil bestehen,
wobei die beiden zueinander im Wesentlichen parallelen Schenkel jeweils zwei unter Einschluss je einer Stufe in Längsrichtung des Kettenglieds nebeneinander angeordnete erste Verbindungsabschnitte und zweite Verbindungsabschnitte aufweisen, an denen gegenseitige Abstände der beiden zueinander im Wesentlichen parallelen Schenkel unterschiedlich sind,
wobei die beiden zueinander im Wesentlichen parallelen Schenkel an ihren ersten Verbindungsabschnitten über den Rückensteg im Querschnitt U-förmig miteinander verbunden sind,
wobei die beiden zueinander im Wesentlichen parallelen Schenkel an ihren zweiten Verbindungsabschnitten zusammen als gabelförmige Schenkelabschnitte ausgebildet sind und
wobei jede Stufe der beiden zueinander im Wesentlichen parallelen Schenkel jeweils eine erste Stufenstützfläche bzw. Anlagekante auf einer Innenseite der Stufe aufweist und eine zweite Stufenstützfläche bzw. Anlagekante auf einer Außenseite der Stufe aufweist,
wird die obige Aufgabenstellung durch Ausbildung der Kettenglieder gemäß dem kennzeichnenden Teil des Anspruchs 1 gelöst.

Somit sind sämtliche aufeinanderfolgende Kettenglieder gegebenenfalls nur mit Ausnahme eines Kettenglieds bzw. Adapters, welches bzw. welche die Schubkette mit dem zu betätigenden Gegenstand wie einem Fenster, einer Klappe oder Lichtkuppel verbindet, fertigungsgünstig und montagegünstig einteilig, zumindest in einem Längsabschnitt im Querschnitt U-förmig mit einem Rückensteg ausgebildet, von dem rechtwinklig zwei seitliche, zueinander im wesentlichen parallele Schenkel abstehen, deren stirnseitige Abschnitte an ihren zu dem Rückensteg abgewandten Enden abgerundete Teilabschnitte aufweisen, die eine Schwenkbarkeit benachbarter Kettenglieder um eine gemeinsame Verbindungsachse bzw. gegenseitig abgewinkelte Positionen der benachbarten Kettenglieder gestatten. Die Verbindungsachse ist durch ein Verbindungselement wie Bolzen, Stift oder Niet realisiert. Jedes Kettenglied weist somit zumindest einen Längsabschnitt auf, in dem es verwindungssteif im Querschnitt U-förmig mit einem Rückensteg und den beiden seitlichen Schenkeln ausgebildet ist.

Eine solche Schubkette zeichnet sich dadurch aus, dass die aufeinanderfolgend schwenkbar verbundenen Kettenglieder fertigungsgünstig aus jeweils einem gleich geformten Teil bestehen. Das Teil kann insbesondere bei Ausführung der Kettenglieder mit nur planen Flächen ein Blechteil gemäß Anspruch 10 sein, das nach Anspruch 11 einfach aus Blech gestanzt und gebogen ist.

Jedes der Kettenglieder der Grundausführung umfasst zwei zueinander im Wesentlichen parallele Schenkel, die über den Rückensteg miteinander verbunden sind und jeweils unter Einschluss einer Stufe zwei in Längsrichtung des Kettenglieds nebeneinander ausgeformte erste und zweite Verbindungsabschnitte aufweisen, an denen die Schenkel mit unterschiedlichen gegenseitigen Abständen ausgebildet sind. Die Verbindungsabschnitte sind zur Verbindung mit jeweils einem benachbarten Kettenglied zur Aufnahme eines Bolzens, eines Stifts oder einer Niet als Verbindungselement vorgesehen. Die beiden zueinander im Wesentlichen parallelen Schenkel sind an ihren ersten Verbindungsabschnitten über den Rückensteg im Querschnitt U-förmig formstabil miteinander verbunden. Die zweiten Verbindungsabschnitte der beiden zueinander im Wesentlichen parallelen Schenkel sind zusammen als gabelförmige Schenkelabschnitte ausgebildet, die nicht direkt über den Rückensteg miteinander verbunden sind, sondern jeweils über eine der Stufen. Da an den Stufen die beiden Schenkel nicht als zueinander parallel verlaufend angesehen werden, sind die Schenkel nur als zueinander im Wesentlichen parallel bezeichnet sind. Wesentlich ist, dass jede Stufe der beiden zueinander im Wesentlichen parallelen Schenkel jeweils eine erste Stufenstützfläche bzw. Anlagekante auf einer Innenseite der Stufe aufweist und eine zweite Stufenstützfläche bzw. Anlagekante auf einer Außenseite der Stufe aufweist. Jede der Stufenstützflächen bzw. Anlagekanten der beiden Schenkel mit ihren gabelförmigen Schenkelabschnitten eines Kettenglieds kann in Verbindung mit einem stirnseitigen Abschnitt eines der Schenkel eines benachbarten Kettenglieds, welches sich an einer der Stufen abstützt, zur Schubübertragung zwischen benachbarten Kettengliedern und zur geradlinigen Ausrichtung der Kettenglieder unter der einwirkenden Schubkraft dienen, so dass sich jedes Kettenglied zumindest über seine vier Stufenstützflächen bzw. Anlagekanten an einem benachbarten Kettenglied sicher abstützt.

Dies gilt insbesondere, wenn gemäß Anspruch 2 stirnseitige Abschnitte der beiden zueinander im Wesentlichen parallelen Schenkel jeweils eines Kettenglieds gerade Teilabschnitte als seitliche Stützflächen aufweist, indem bei gerader Ausrichtung eines der Kettenglieder zu einem unmittelbar benachbarten Kettenglied die geraden Teilabschnitte der stirnseitigen Abschnitte, die an den ersten Verbindungsabschnitten des Kettenglieds ausgebildet sind, an den ersten Stufenstützflächen des ersten benachbarten Kettenglieds anliegen und die geraden Teilabschnitte der stirnseitigen Abschnitte, die an den zweiten Verbindungsabschnitten des benachbarten Kettenglieds ausgebildet sind, an den zweiten Stufenstützflächen des Kettenglieds anliegen. Damit wird ein zuverlässiges auch seitliches Abstützen an insgesamt vier seitlichen Stufenstützflächen bzw. Anlagekanten des Kettenglieds zu seinen benachbarten Kettenglieder zumindest bei gerader Ausrichtung der Kettenglieder erreicht.

Erfindungsgemäß erfolgt auch bei abgewinkelter Ausrichtung der Kettenglieder die vorteilhafte Wirkung zur Übertragung der Schubkraft und seitliche Abstützung in einer mit solchen Kettengliedern ausgebildeten Schubkette zumindest teilweise mit den abgerundeten Teilabschnitten der stirnseitigen Abschnitte der Kettenglieder gemäß dem kennzeichnenden Teil des Anspruchs 1, wenn zum Beispiel die Schubkette umgelenkt wird. Dabei liegen jeweils die abgerundeten Teilabschnitte der stirnseitigen Abschnitte der Schenkel, die an jeweils einem ersten der beiden Verbindungsabschnitte des Kettenglieds ausgebildet sind, an den ersten Stufenstützflächen bzw. Anlagekanten des ersten benachbarten Kettenglieds an und jeweils die abgerundeten Teilabschnitte der stirnseitigen Abschnitte der Schenkel, die an einem zweiten der beiden Verbindungsabschnitte des Kettenglieds ausgebildet sind, an den zweiten Stufenstützflächen des benachbarten Kettenglieds.

Zur sicheren Schubübertragung und gegenseitigen seitlichen Abstützung unmittelbar benachbarter Kettenglieder an deren Stufenstützflächen ist nach Anspruch 3 die Abmessung der Stufenstützflächen in den beiden Schenkeln jeweils eines Kettenglieds quer zur Längsrichtung mindestens gleich der Blechstärke der Schenkel des Kettenglieds, aus denen die Stufen mit ihren Stufenstützflächen ausgeformt sind. Mit der Richtungsangabe "quer zur Längsrichtung" ist die Richtung in der Breite des Rückens bezeichnet.

In einer ersten Variante der Grundausführung nach Anspruch 4 weisen die beiden zueinander im Wesentlichen parallelen Schenkel an ihren beiden ersten Verbindungsabschnitten gabelförmige Verlängerungen in Längsrichtung des Kettenglieds über den Rückensteg hinaus auf, die an den ersten Stufenstützflächen bzw. Anlagekanten eines benachbarten Kettenglieds bei dessen gerader Ausrichtung zur Anlage gelangen. Weiterhin erstreckt sich bei dieser Variante der Grundausführung zur sicheren Übertragung großer Schubkräfte der Rückensteg jeweils eines der Kettenglieder bis zwischen die beiden gabelförmigen Schenkelabschnitte, die als zweite Verbindungsabschnitte des Kettenglieds ausgebildet sind, so dass bei gerader Schubkette beidseitig des Rückenstegs jeweils eine der beiden scheitelseitigen Stirnflächen als transversale Stützflächen an einer transversalen Stützfläche eines der unmittelbar benachbarten Kettenglieder anliegt. Bei dieser Ausführungsform trägt somit der Rückensteg durch unmittelbare Verbindung mit dem Rückensteg eines benachbarten Kettenglieds wesentlich zur Schubkraftübertragung bei.

Statt der gabelförmigen Verlängerungen der beiden zueinander im Wesentlichen parallelen Schenkel an ihren beiden ersten Verbindungsabschnitten des Kettenglieds der obigen ersten Variante der Grundausführung können die beide Schenkel einfach über den sie verbindenden Rückensteg in Längsrichtung hinausragen, wenn der Rückensteg entsprechend lang in einen Zwischenraum zwischen den zweiten Verbindungsabschnitten der Schenkel bzw. gabelförmigen Schenkelabschnitten des Kettenglieds hineinragt, so dass die transversalen Stützflächen der Rückenstege unmittelbar benachbarter Kettenglieder bei gerader Ausrichtung aneinander anliegen, um gegebenenfalls Schub zu übertragen.

Fertigungsgünstig besonders hinsichtlich des Biegevorgangs eines Blechteils aus dem gegebenenfalls das Kettenglied besteht, erstreckt sich in einer zweiten Variante der Grundausführung der Schubkette bzw. der sie bildenden Kettenglieder der Rückensteg jeder Schubkette nach Anspruch 5 lediglich zwischen den beiden ersten Verbindungsabschnitten der beiden zueinander im Wesentlichen parallelen Schenkel, die einen kleineren gegenseitigen Abstand im Vergleich zu dem gegenseitigen Abstand der beiden parallelen Schenkel an deren beiden zweiten Verbindungsabschnitten aufweisen.

In einer weiteren Ausführung der rückensteifen Schubkette nach Anspruch 7, die sich insbesondere zum zeitweisen Anlegen der Rückenstege von zwei einzelnen Schubketten eignet, sind die Kettenglieder jeweils einer der Schubketten nicht vollständig gleich, aber formähnlich in der Weise ausgebildet, dass die aufeinander folgend schwenkbar verbundenen Kettenglieder abwechselnd als äußere Kettenglieder jeweils einteilig aus einem von untereinander gleich geformten ersten Blechteilen, die im Querschnitt U-förmig mit zwei seitlichen, zueinander parallelen Schenkeln und einem diesen verbindenden Rückensteg ausgebildet sind, sowie als innere Kettenglieder, die ähnlich den äußeren Kettengliedern jeweils einteilig aus einem von untereinander gleich geformten zweiten Blechteilen, die im Querschnitt U-förmig mit jeweils zwei seitlichen, zueinander parallelen Schenkeln und einem diese verbindenden Rücksteg, der weniger breit als der Rückensteg der äußeren Kettenglieder ist, ausgebildet sind, bestehen. Die Kettenglieder der beiden Schubketten zeichnen sich dadurch aus, dass jeweils die äußere Oberfläche des Rückenstegs der äußeren Kettenglieder und der inneren Kettenglieder in deren Längsrichtung geriffelt ist.

Jedes der Kettenglieder besteht somit aus einem gleich bzw. ähnlich geformten Teil, das nach Anspruch 10 als Blechteil ausgebildet sein kann und in diesem Fall gemäß Anspruch 11 einfach aus Blech gestanzt und gebogen ist

Die aufeinander folgend schwenkbar verbundenen Kettenglieder jeweils einer einzelnen Schubkette werden bei deren Montage so ineinander gesetzt, dass ein äußeres Kettenglied je einen Abschnitt zweier innerer Kettenglieder seitlich einschließt, so dass die Rückenstege des äußeren Kettenglieds und der beiden inneren Kettenglieder in gleicher Höhe angeordnet sind und bei gerader Ausrichtung der inneren Kettenglieder und des äußeren Kettenglieds mit ihren transversalen Stützflächen beidseitig an den transversalen Stützflächen des Rückenstegs des äußeren Kettenglieds anstoßen bzw. aneinander anliegen können.

Zwei solcher einzelnen Schubketten können endseitig über einen Adapter miteinander verbunden werden und an ihren zu dem Adapter entgegengesetzten Enden an zwei einander gegenüberliegende Kettenräder als Antriebsorgane geführt werden, so dass sich in dem zwischen dem Adapter und der Zuführung zu den Kettenrädern liegenden Abschnitt der beiden Schubketten die Rückenstege beider Schubketten über deren gemeinsamen geraden Abschnitt aneinander legen und sich gegenseitig abstützen.

Damit sich die beiden einzelnen Schubketten in einer solchen zusammengesetzten Schubkettenanordnung nicht quer zueinander verschieben, ist die äußere Oberfläche des Rückenstegs jedes Kettenglieds in dessen Längsrichtung geriffelt. Eine solche einfach zu fertigende Riffelung ergibt eine kraftschlüssige, nicht notwendigerweise formschlüssige Verbindung zwischen den mit ihren Rückenstegen aneinander liegenden beiden Schubketten der zusammengesetzten Schubkettenanordnung.

Diese Riffelung der äußeren Oberfläche des Rückenstegs kann vorteilhaft auch bei Ausführungsformen der Erfindung nach den Ansprüchen 1 bis 5 insbesondere in Verbindung mit einem planen Rückensteg (vorteilhaft) vorgesehen sein.

Bei der Ausführungsform gemäß Anspruch 7 ist vorzugsweise weiterhin in jedem Kettenglied der einzelnen Schubketten der Rückensteg gemäß Anspruch 8 symmetrisch zu der Mitte des Kettenglieds in dessen Längsausrichtung ausgebildet und gleich lang wie der Abstand von zwei symmetrisch zu der Mitte in Längsrichtung des Kettenglieds angeordneten Durchgangslöchern für ein Verbindungselement, so dass die scheitelseitigen Stirnflächen der Rückenstege bei gerader Ausrichtung der Kettenglieder aneinander liegen, um sich gegenseitig abzustützen, und bei Umlenkung der Schubketten insbesondere an den Kettenrädern die Schwenkbarkeit der Kettenglieder nicht zu behindern.

Zum Erreichen einer großen gegenseitigen Schwenkbarkeit der benachbarten Kettenglieder, wie sie für eine aus zwei einzelnen Schubketten zusammengesetzte Schubkettenanordnung im Bereich der Umlenkung der einzelnen Schubketten gewünscht wird, sind nach Anspruch 9 insbesondere die stirnseitigen Abschnitte der Schenkel der Kettenglieder um deren Verbindungsachse bzw. Durchgangslöcher, in denen jeweils ein Verbindungselement montiert ist, bis über 135° auf den zu dem Rückensteg abgewandten Seiten der Schenkel abgerundet.

Für den Antrieb der rückensteifen Schubkette ist generell ein Kettenrad vorgesehen, welches über ein Getriebe mit einem Antriebsmotor in Verbindung steht. Damit während des Abrollens der Schubkette auf einem antreibenden Kettenrad, in das die Schubkette eingreift, keine inhomogene Bewegung entsteht, die einen großen Kraftverbrauch hervorrufen kann, sind die aufeinander folgend miteinander verbundenen, jeweils aus einem gleichen Teil bestehenden Kettenglieder insbesondere in der ersten Variante der Grundausführung der Schubkette nach Anspruch 4 mit ihrem Rückensteg zu ihrer zu dem Rückensteg entgegengesetzten Seite hin gemäß Anspruch 12 gekrümmt. Die von dem Rückensteg abgewinkelten parallelen Schenkel können an ihrem von dem Rückensteg abgewandten Rand zwischen abgerundeten Teilabschnitten eine Einbuchtung zur Gewährleistung einer großen gegenseitigen Schwenkbarkeit aufweisen.

Weiterhin kann in der ersten Variante der Grundausführung das Kettenglied abgesehen von den Verbindungselementen aus jeweils einem einzigen Kunststoffspritzteil oder Metalldruckgussteil nach Anspruch 16 bestehen, mit dem die Krümmung des Rückenstegs fertigungsgünstig realisiert werden kann.

Verbindungselement, so dass die scheitelseitigen Stirnflächen der Rückenstege bei gerader Ausrichtung der Kettenglieder aneinander liegen, um sich gegenseitig abzustützen, und bei Umlenkung der Schubketten insbesondere an den Kettenrädern die Schwenkbarkeit der Kettenglieder nicht zu behindern.

Zum Erreichen einer großen gegenseitigen Schwenkbarkeit der benachbarten Kettenglieder, wie sie für eine aus zwei einzelnen Schubketten zusammengesetzte Schubkettenanordnung im Bereich der Umlenkung der einzelnen Schubketten gewünscht wird, sind nach Anspruch 11 insbesondere die stirnseitigen Abschnitte der Schenkel der Kettenglieder um deren Verbindungsachse bzw. Durchgangslöcher, in denen jeweils ein Verbindungselement montiert ist, bis über 135° auf den zu dem Rückensteg abgewandten Seiten der Schenkel abgerundet.

Für den Antrieb der rückensteifen Schubkette ist generell ein Kettenrad vorgesehen, welches über ein Getriebe mit einem Antriebsmotor in Verbindung steht. Damit während des Abrollens der Schubkette auf einem antreibenden Kettenrad, in das die Schubkette eingreift, keine inhomogene Bewegung entsteht, die einen großen Kraftverbrauch hervorrufen kann, sind die aufeinander folgend miteinander verbundenen, jeweils aus einem gleichen Teil bestehenden Kettenglieder insbesondere in der ersten Variante der Grundausführung der Schubkette nach Anspruch 6 mit ihrem Rückensteg zu ihrer zu dem Rückensteg entgegengesetzten Seite hin gemäß Anspruch 14 gekrümmt. Die von dem Rückensteg abgewinkelten parallelen Schenkel können an ihrem von dem Rückensteg abgewandten Rand zwischen abgerundeten Teilabschnitten eine Einbuchtung zur Gewährleistung einer großen gegenseitigen Schwenkbarkeit aufweisen.

Weiterhin kann in der ersten Variante der Grundausführung das Kettenglied abgesehen von den Verbindungselementen aus jeweils einem einzigen Kunststoffspritzteil oder Metalldruckgussteil nach Anspruch 18 bestehen, mit dem die Krümmung des Rückenstegs fertigungsgünstig realisiert werden kann.

Bevorzugt weisen nach Anspruch 13 in der ersten Variante der Grundausführung des Kettenglieds die beiden ersten Verbindungsabschnitte der beiden Schenkel Verlängerungen über den Rückensteg in Längsrichtung des Kettenglieds hinaus auf, die quer zur Längsrichtung des Kettenglieds zu dem Rückensteg gemäß Anspruch 13 nach außen versetzt sind. Die Verlängerungen sind in dem Maße nach außen versetzt, dass ihre Stirnseiten jeweils an den ersten Stufenstützflächen auf einer Innenseite der Stufen des benachbarten Kettenglieds zur Schubkraftübertragung und Ausrichtung des Kettenglieds zur Anlage gelangen.

Zweckmäßig sind nach Anspruch 14 seitliche Abschnitte der gabelförmigen Schenkelabschnitte bzw. der zweiten Verbindungsabschnitte neben den Stirnseiten der gabelförmigen Schenkelabschnitte parallel zueinander quer zur Längsrichtung des Kettenglieds nach innen versetzt, um sicher an den zweiten Stufenstützflächen auf den Außenseiten der Stufen und an den ersten Verbindungsabschnitten der parallelen Schenkel eines benachbarten Kettenglieds zur Schubübertragung und Ausrichtung des Kettenglieds anzuliegen.

Vorteilhaft ist in den Versionen des Kettenglieds, in denen jeweils eine scheitelseitige Stirnfläche des Rückenstegs als transversale Stützfläche vorgesehen ist, die bei gerader Schubkette an einer transversalen Stützfläche an dem Rückensteg eines der unmittelbar benachbarten Kettenglieder anliegt, nach Anspruch 15 die scheitelseitige Stirnfläche des Rückenstegs als eine über dessen gesamte Breite durchgehend transversale Stützfläche ausgebildet, über die eine Schubkraft mit relativ geringer Flächenpressung verschleißarm übertragen werden kann.

Sämtliche Versionen der Kettenglieder können nach Anspruch 16 montagegünstig aus einem einzigen Kunststoffspritzteil oder Metalldruckgussteil bestehen, das sich besonders im Fall des Kettenglieds mit gekrümmtem Rückensteg nach Anspruch 12 empfiehlt.

Ausführungsbeispiele der Kettenglieder werden nachfolgend anhand einer Zeichnung mit 22 Figuren erläutert. Es zeigen:
- Figur 1: eine schaubildliche Darstellung eines Abschnitts der Schubkette, bestehend aus zwei miteinander verbundenen Kettengliedern einer ersten Ausführungsform, d.h. der obigen ersten Variante der Grundausführung;
- Figur 2: eine schaubildliche Darstellung eines der Kettenglieder nach Figur 1;
- Figur 3: eine Seitenansicht auf das Kettenglied gemäß Figur 2;
- Figur 4: eine Draufsicht auf das Kettenglied gemäß den Figuren 2 und 3;
- Figur 5: einen Schnitt durch das Kettenglied gemäß Figur 3 in einer Schnittebene A-A;
- Figur 6: einen Schnitt durch das Kettenglied gemäß Figur 4 in einer Schnittebene B-B;
- Figur 7: eine Schubkette, bestehend aus Kettengliedern gemäß den Figuren 1 bis 6;
- Figur 8: eine zweite Ausführungsform, d.h. die obige zweite Variante der Grundausführung eines Kettenglieds in einer Ansicht auf dessen Innenseite;
- Figur 9: eine Ansicht auf die Stirnseite des Kettenglieds nach Figur 8;
- Figur 10: eine Seitenansicht auf das Kettenglied gemäß den Figuren 8 und 9;
- Figur 11: eine Ansicht auf eine Innenseite eines Schubkettenabschnitts, bestehend aus Kettengliedern einer dritten Ausführungsform, die eine abgewandelte zweite Variante der Grundausführung ist;
- Figur 12: eine Draufsicht auf ein äußeres Kettenglied einer weiteren Ausführungsform einer Schubkette;
- Figur 13: eine Ansicht auf eine Stirnseite des äußeren Kettenglieds nach Figur 12;
- Figur 14: eine Seitenansicht auf das äußere Kettenglied gemäß den Figuren 12 und 13;
- Figur 15: eine Draufsicht auf ein inneres Kettenglied der vierten Ausführungsform der Schubkette;
- Figur 16: eine Ansicht auf eine Stirnseite des inneren Kettenglieds nach Figur 15;
- Figur 17: eine Seitenansicht auf ein inneres Kettenglied nach den Figuren 15 und 16;
- Figur 18: einen Einzel-Schubkettenabschnitt aus äußeren Kettengliedern und inneren Kettengliedern gemäß den Figuren 12 bis 17 in einem Längsschnitt
- Figur 19: eine Ansicht auf die Stirnseite des äußeren Kettenglieds nach Figur 13 in größerer Darstellung;
- Figur 20: eine Seitenansicht auf das äußere Kettenglied nach Figur 14 in größerer Darstellung;
- Figur 21: eine Ansicht auf die Stirnseite einer Anordnung von zwei Kettengliedern nach Figur 19 in noch größerer Darstellung Rückensteg an Rückensteg und
- Figur 22: eine Einzelheit aus Figur 21 nochmals vergrößert im Maßstab 25:1.

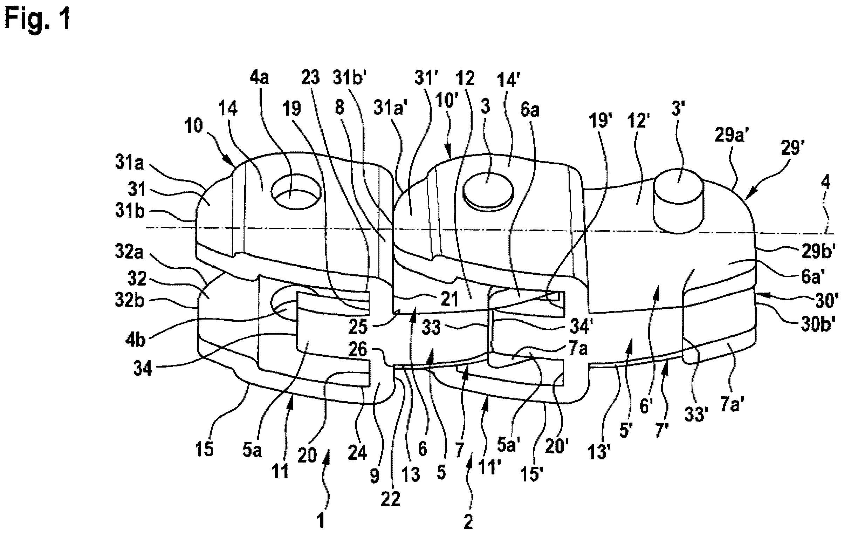

In Figur 1 ist ein Abschnitt einer Schubkette, bestehend aus zwei gleich ausgebildeten Kettengliedern 1, 2 dargestellt, die über einen Bolzen 3 des Kettenglieds 1 schwenkbar miteinander verbunden sind. Die beiden Kettenglieder 1, 2 sind zueinander gerade ausgerichtet dargestellt.

Generell sind in Figur 1 Einzelheiten des zu dem Kettenglied 1 benachbarten Kettenglieds 2 mit Bezugszeichen versehen, die mit einem Apostroph den Bezugszeichen des ersten Kettenglieds 1 entsprechen.

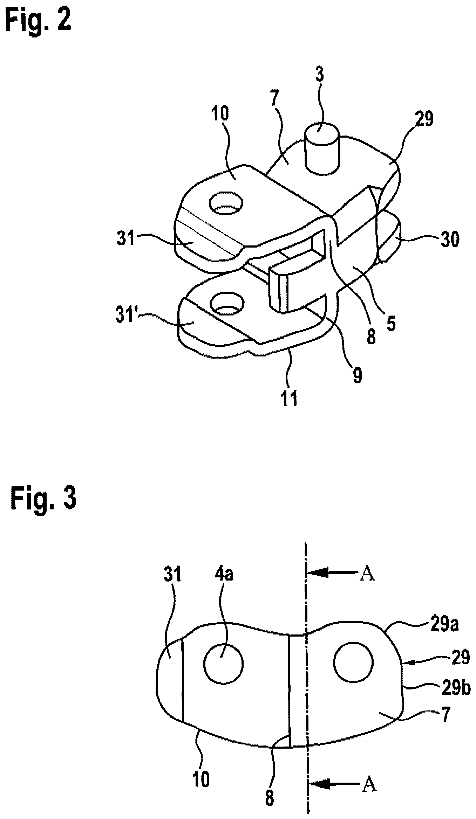

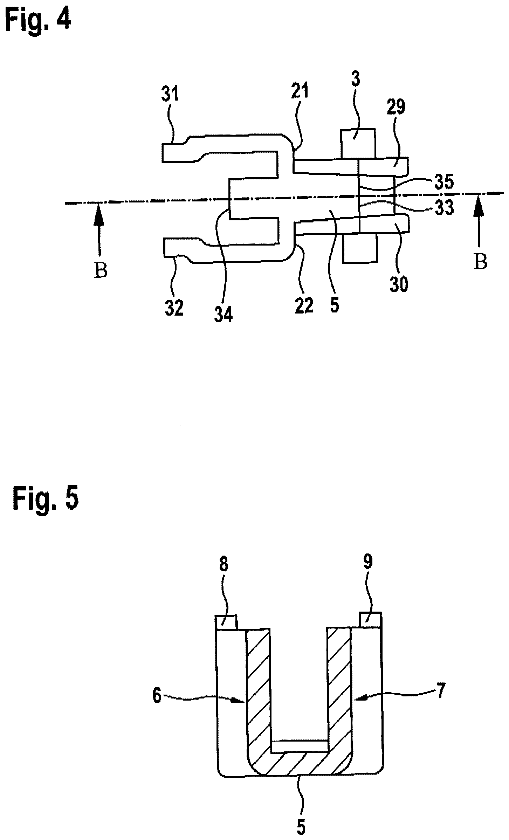

Jedes der Kettenglieder 1, 2 besteht aus einem Kunststoffspritzteil oder in aufwendigerer Ausführung aus einem Metalldruckgussteil, das gemäß den Figuren 2 bis 7 geformt ist.

Das Kettenglied, zum Beispiel 1, ist über einen nicht bezeichneten Längsabschnitt in Längsrichtung 4 im Querschnitt U-förmig geformt, in dem zwei von einem Rückensteg 5 rechtwinklig abstehende Schenkel 6, 7 im Abstand parallel zueinander verlaufen. Die Schenkel 6, 7 gehen von dem im Querschnitt U-förmigen Längsabschnitt über Stufen 8, 9 in gabelförmige Schenkelabschnitte 10, 11 über, deren gegenseitiger Abstand größer ist als derjenige der Schenkel 6, 7 in dem U-förmigen Querschnittsbereich. Die Schenkel 6, 7 in dem U-förmigen Querschnittsbereich bilden erste Verbindungsabschnitte 12, 13, neben denen in Längsrichtung des Kettenglieds, 1 zweite Verbindungsabschnitte 14, 15 in Form der gabelförmigen Schenkelabschnitte 10, 11 angeordnet sind. Die Verbindungsabschnitte 12 bis 15 sind Abschnitte des Kettenglieds 1, an denen jeweils eine Verbindung mit einem benachbarten Kettenglied, zum Beispiel 2, erfolgt.

Die ersten Verbindungsabschnitte 12, 13 dienen zur festen Aufnahme eines Verbindungselements, nämlich des Bolzens 3, der in Durchgangslöchern in zweiten Verbindungsabschnitten 14', 15' bzw. gabelförmigen Schenkelabschnitten 10', 11' des benachbarten Kettenglieds 2 gelagert ist. In den Verbindungsabschnitten 14, 15 des Kettenglieds 1 sind solche Durchgangslöcher 4a, 4b erkennbar.

Eine Besonderheit dieser ersten Ausführungsform der rückensteifen Schubkette ist die Krümmung des Rückenstegs 5 bzw. 5' zu seiner zu dem Rückensteg 5, 5' entgegengesetzten Seite hin, die zum Beispiel aus den Figuren 2, 3 und 6 ersichtlich ist. Der Krümmung des Rückenstegs 5, 5' entspricht eine ähnliche Einbuchtung der entgegengesetzen Außenränder der Schenkel 6, 7 einschließlich deren gabelförmigen Schenkelabschnitten 10, 11. Der Krümmungsradius des Rückenstegs 5,5' ist bevorzugt an ein eine Schubkette mit Kettengliedern wie die Kettenglieder 1, 2 antreibendes Kettenrad 16 angepasst, so dass der Krümmungsradius gleich dem Abstand der Außenfläche des Rückenstegs zu dem Mittelpunkt des Kettenrads ist.

Dies ist in Figur 7 verdeutlicht, in der das eine Schubkette mit Kettengliedern wie den Kettenglieder 1, 2 antreibende Kettenrad 16 gezeigt ist, das einen rückensteifen Schubkettenabschnitt 17 über einen Adapter 18 an ein zu betätigendes Objekt, zum Beispiel einem nicht dargestellten Fenster, drückt.

Durch die gekrümmte Form der Kettenglieder, zum Beispiel 1, 2 kann die Schubkette in gleichförmiger Bewegung mit dem Kettenrad 16 angetrieben werden, wobei die Rücken der Kettenglieder 1, 2 von dem Kettenrad 16 jeweils nur minimal abstehen und reibungs- und verschleißfrei durch einen in Figur 7 nicht dargestellten Kettenkanal geführt werden. Besonders vorteilhaft kann eine solche Schubkette auch mit in der Zeichnung nicht dargestellten Rollen geführt werden.

Die oben erwähnten Stufen 8, 9 zwischen einem Ende des Längsabschnitts des Kettenglieds 1, in dem von dem Rückensteg 5 bzw. 5' die Schenkel 6, 7 bzw. 6', 7' in U-förmiger Anordnung rechtwinklig und zueinander parallel abstehen, und den jeweils gabelförmig angeordneten Schenkelabschnitten 10, 11 verlaufen rechtwinklig zu der Längsrichtung 4 des Kettenglieds und bilden jeweils eine erste Stufenstützfläche 19 bzw. 20 auf der Innenseite der Stufe 8 bzw. 9 sowie eine zweite Stufenstützfläche 21 bzw. 22 auf deren Außenseite. Jede der Stufenstützflächen 19, 20; 21, 22 umfasst eine Anlagekante 23, 24, 25, 26, die eine präzise Positionierung und zuverlässige Abstützung benachbarter Kettenglieder ermöglicht.

Zum stabilen, verwindungsfreien, kraftschlüssigen Kontakt des Kettenglieds 1 an dem unmittelbar benachbarten Kettenglied 2, mit dem es um einen Bolzen 3 schwenkbar verbunden ist, sind die beiden zueinander im Wesentlichen parallelen Schenkel 6, 7 in Längsrichtung 4 des Kettenglieds 1 über den Rückensteg 5, der die Schenkel 6, 7 im Querschnitt U-förmig zusammenhält, hinaus mit gabelförmigen Verlängerungen 6a, 7a verlängert. Am besten sind entsprechende Verlängerungen 6a', 7a' an dem Kettenglied 2 in Figur 1 zu erkennen. Die gabelförmigen Verlängerungen 6a, 7a bzw. 6a', 7a' sind bezüglich der parallelen Schenkel 6,7 bzw. 6', 7' so nach außen versetzt, dass sie sich an je einer ersten Stufenstützfläche z.B. 19', 20' des benachbarten Kettenglieds 2 zur geraden Erstreckung der Kettenglieder 1,2 und Schubübertragung abstützen können.

Hierzu weist im Einzelnen, wie weiter an dem Kettenglied 2 erkennbar, ein stirnseitiger Abschnitt 29' des Schenkels 6' an seinem zu dem Rückensteg 5' abgewandten Ende einen abgerundeten Teilabschnitt 29a' auf und an diesen stirnseitig anschließend einen geraden Teilabschnitt 29b'. Gleich ausgeformte stirnseitige Abschnitte an den gabelförmigen Verlängerungen 6a, 7a des Kettenglieds 1 können an den ersten Stufenstützflächen 19', 20' des benachbarten Kettenglieds 2 anliegen, und zwar in Figur 1 nicht erkennbare gerade Teil-Abschnitte bei gerade ausgerichteten Kettenliedern 1, 2 und abgerundete Teilabschnitte bei gegenseitig abgewinkelten Kettengliedern 1, 2. Weiterhin sind seitliche Abschnitte der gabelförmigen Schenkel-Abschnitte 10', 11' des Kettenglieds 2, von denen ein Abschnitt 31' in Figur 1 zu erkennen ist, gleich wie seitliche Abschnitte 31, 32 der gabelförmigen Schenkelabschnitte 10, 11 parallel zueinander und quer zur Längsrichtung versetzt, um an den zweiten Stufenstützflächen 21, 22 des Kettenglieds 1 sicher anzuliegen, und zwar bei gerader Ausrichtung der Kettenglieder 1, 2 mit jeweils einem geraden Teilabschnitt, zum Beispiel 31b'.

Durch Ausbildung der seitlichen Abschnitte 31, 32, 31', 32' mit jeweils einem abgerundeten Teilabschnitt, zum Beispiel 31a, 32a, der sich an einen geraden Teilabschnitt, zum Beispiel 31b, 32b anschließt und der in annähernd geradlinig ausgerichteter Stellung benachbarter Kettenglieder zur Schubkraftübertragung beitragen kann, können benachbarte Kettenglieder ungehindert zueinander bei Umlenkung zum Beispiel durch ein Kettenrad, abgewinkelt werden.

Bei gerade ausgerichteten Kettengliedern 1, 2 stützen sich außerdem transversale Stützflächen gegeneinander kraftübertragend ab, die durch scheitelseitige Stirnflächen 33, 34 des Rückenstegs 5 bzw. scheitelseitige Stimflächen 33', 34' des Rückenstegs 5' gebildet sind. In Figur 1 stützen sich die scheitelseitige Stirnfläche 33 des Kettenglieds 1 und die scheitelseitige Stirnfläche 34' des Kettenglieds 2 gegeneinander ab. Somit kann eine verwindungssteife Schubkraftübertragung zwischen zwei benachbarten Kettengliedern an insgesamt fünf Flächen bzw. Teilabschnittten kraftflussmäßig parallel erfolgen.

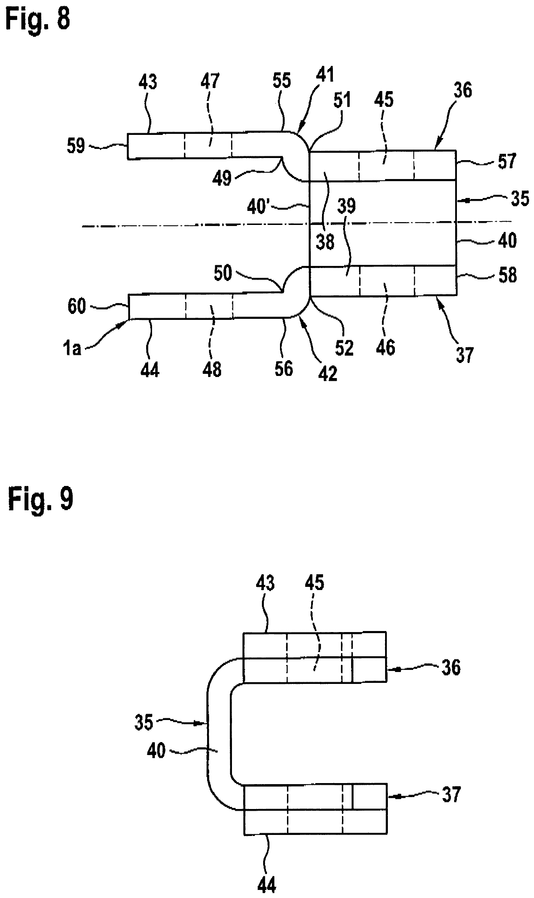

Die zweite Ausführungsform gemäß den Figuren 8, 9 und 10 stellt eine gegenüber der ersten Ausführungsform einfachere, aber im Wesentlichen gleich wirkende Ausführungsform mit einem ebenen Rückensteg 35 dar, der in einer U-förmigen Anordnung zwei zueinander im Wesentlichen parallele Schenkel 36, 37 miteinander verbindet, siehe insbesondere Figur 9. Diese Ausführungsform kann besonders fertigungsgünstig aus einem einzigen Blechteil hergestellt werden. Sie eignet sich auch zur direkten Verbindung als letztes Kettenglied einer Schubkette mit einem zu betätigenden Objekt, beispielsweise einem Fenster.

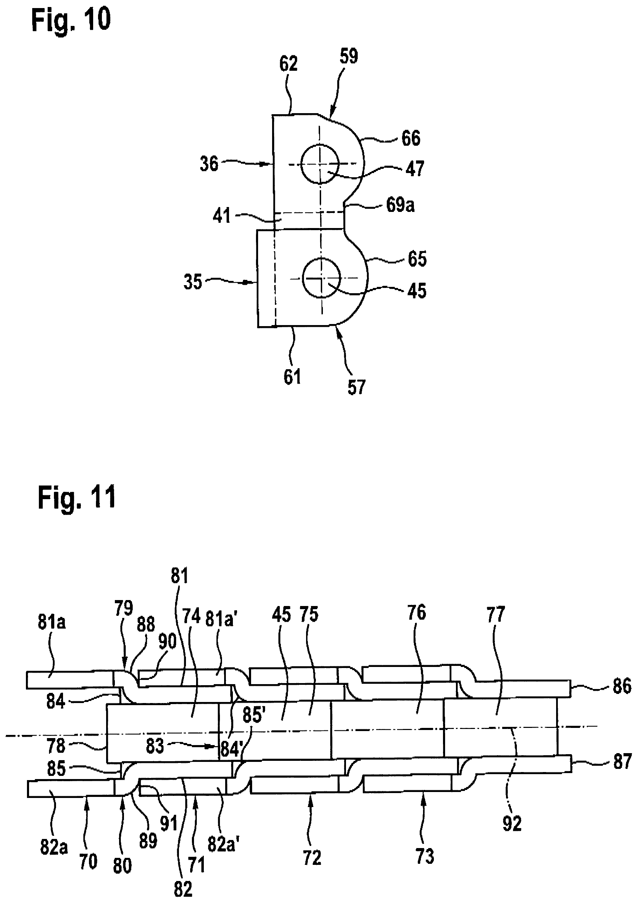

Wie insbesondere aus den Figuren 8 und 10 ersichtlich, erstreckt sich bei der zweiten Ausführungsform eines Kettenglieds 1a der Rückensteg 35 lediglich über jeweils einen ersten Verbindungsabschnitt 38 bzw. 39 der beiden Schenkel 36, welcher von einer scheitelseitigen Stirnfläche 40 des Rückenstegs jeweils bis zu einer Stufe 41 bzw. 42 reicht, an der jeweils der Schenkel 36 bzw. 37 von seinem ersten Verbindungsabschnitt 38 bzw. 39 zu seinem zweiten Verbindungsabschnitt 43 bzw. 44 übergeht. Wie weiter aus Figur 8 ersichtlich, ist der gegenseitige Abstand der Schenkel 36, 37 in dem Bereich der ersten Verbindungsabschnitte 38, 39 geringer als der Abstand der Schenkel 36, 37 im Bereich der zweiten Verbindungsabschnitte 43, 44, und zwar in dem Maße, dass die Außenseiten der ersten Verbindungsabschnitte 38, 39 an den Innenseiten der zweiten Verbindungsabschnitte 43, 44 drehbar bzw. schwenkbar eines benachbarten Kettenglieds anliegen können.

Die ersten Verbindungsabschnitte 38, 39 dienen auch in dieser Ausführungsform zur Aufnahme eines Verbindungselements, insbesondere in Form eines Bolzens, der nicht dargestellt ist. Dargestellt sind die den Bolzen aufnehmenden Durchgangslöcher 45, 46 in den beiden ersten Verbindungsabschnitten 38, 39. In den zweiten Verbindungsabschnitten 43, 44 sind miteinander fluchtende Durchgangslöcher 47, 48 für einen Bolzen ausgeformt, an dem ein benachbartes Kettenglied drehbar gelagert werden kann, um einen Schubkettenabschnitt zu bilden.

Die Stufen 41, 42 zwischen jeweils einem der ersten Verbindungsabschnitte 38, 39 und einem der zweiten Verbindungsabschnitte 43, 44 sind rechtwinklig zu der Längsrichtung des Kettenglieds orientiert, die durch eine strich-punktierte Linie angedeutet ist, und bilden jeweils eine erste Anlagekante 49 bzw. 50 auf der Innenseite der Stufe 41 bzw. 42 sowie eine zweite Anlagekante 51 bzw. 52 auf der Außenseite der Stufe 41 bzw. 42.

Wie aus Figur 8 ersichtlich, gehen die Stufen 41, 42 zu den zweiten Verbindungsabschnitten 43, 44 in Form gabelförmiger Schenkelabschnitte 55, 56 über. Die identisch ausgebildeten Kettenglieder der zweiten Ausführungsform sind entsprechend deren Dimensionierung so zusammensetzbar, dass bei gerader Schubkette stirnseitige Abschnitte 57, 58, die an den ersten Verbindungsabschnitten 38, 39 der Schenkel 36, 37 ausgebildet sind, an den ersten Anlagekanten eines benachbarten Kettenglieds zur Anlage gelangen, die den Anlagekanten 49, 50 des in Figur 8 dargestellten Kettenglieds entsprechen.

Analog dazu gelangen stirnseitige Abschnitte 59, 60 der zweiten Verbindungsabschnitte 43, 44 bzw. der entsprechenden gabelförmigen Schenkelabschnitte 55, 56 zur Anlage an den Anlagekanten eines auf dieser Seite benachbarten Kettenglieds, die den Anlagekanten 51, 52 des Kettenglieds entsprechen. Jedes Kettenglied wird somit an insgesamt vier Anlagekanten 49 bis 50 zwischen zwei benachbarten Kettengliedern gerade abgestützt.

Zur Anlage an den genannten Anlagekanten gelangen im Einzelnen gerade Teilabschnitte 61 bzw. 62 des stirnseitigen Abschnitts 57 an dem ersten Verbindungsabschnitt 38 des Schenkels 36 bzw. des stirnseitigen Abschnitts 59 an dem zweiten Verbindungsabschnitt 43 des Schenkels 36. Analog dazu ist der Schenkel 37 ausgebildet.

Zur ungehinderten Schwenkbarkeit der Kettenglieder gegeneinander insbesondere im Bereich eines antreibenden Kettenrads der Schubkette, schließt sich an die geraden Teilabschnitte, zum Beispiel 61, 62, jeweils ein abgerundeter Teilabschnitt, zum Beispiel 65, 66, an, der bei nahezu gerader Ausrichtung der Kettenglieder in einer Schubkette zur Schubübertragung beitragen kann. Der abgerundete Teilabschnitt erstreckt sich, wie aus Figur 10 ersichtlich, über einen großen Winkelbereich von über 100°, dessen Scheitel in den Mittelpunkten der Bolzen bzw. Durchgangslöcher, zum Beispiel 45, 47, liegt. Die abgerundeten Teilabschnitte, zum Beispiel 65, 66, an den ersten Verbindungsabschnitten und an den zweiten Verbindungsabschnitten bilden eine Einbuchtung 69a auf der dem Rückensteg 35 gegenüberliegenden Seite des Kettenglieds, wie aus Figur 10 ersichtlich.

Veranschaulicht ist die gegenseitige Abstützung benachbarter Kettenglieder in Figur 11 für eine dritte Ausführungsform, die einerseits der oben genannten zweiten Ausführungsform in den Bereichen entspricht, in denen an Anlagekanten 84, 85, 88, 89, die durch Stufen, zum Beispiel 79, 80, zwischen jeweils einem ersten Verbindungsabschnitt und einem zweiten Verbindungsabschnitt bzw. gabelförmigen Schenkelabschnitt eines Kettenglieds, zum Beispiel 70, gebildet sind, stirnseitige Abschnitte, zum Beispiel 90, 91 der Schenkel benachbarter Kettenglieder, zum Beispiel 71, anliegen.

Die in Figur 11 gezeigte dritte Ausführungsform der untereinander gleich geformten Kettenglieder 70-73 unterscheidet sich von denen der zweiten Ausführungsform dadurch, dass die Kettenglieder 70 bis 73 der dritten Ausführungsform plane Rückenstege 74 bis 77 aufweisen, die sich nicht gänzlich über einen Längsabschnitt des Kettenglieds, zum Beispiel 70, erstrecken, der durch die Ausdehnung dessen ersten Verbindungsabschnitts 81 in Längsrichtung 92 des Kettenglieds definiert ist, die mit einer strichpunktierten Linie angedeutet ist.

Vielmehr erstreckt sich jeweils ein Fortsatz, zum Beispiel 78 des Rückenstegs 74 über die Stufen 79, 80 bis zwischen die zweiten Verbindungsabschnitte bzw. gabelförmige Schenkelabschnitte, zum Beispiel 81a, 82a des Kettenglieds 70. In gleichem Maße wie der Rückensteg 74 durch den Fortsatz 78 verlängert ist, ist er auf der außen gegenüberliegenden Seite an den ersten Verbindungsabschnitten, zum Beispiel 81, 82 verkürzt, siehe Verkürzung 83 des Rückenstegs 74. Durch die Fortsätze und Verkürzungen der Rückenstege wird erreicht, dass bei gerader Anordnung der Kettenglieder 70 bis 73 jeweils ein stirnseitiger Abschnitt eines Fortsatzes, zum Beispiel 78, des Rückenstegs 74 transversal an dem stirnseitigen Abschnitt eines Rückenstegs eines benachbarten Kettenglieds auf der Seite der Verkürzung des Rückenstecks anliegt. Diese Verkürzung entspricht der Verkürzung 83 des Rückenstegs 74. Durch die Ausbildung des Rückenstegs 74 werden also zwei Abstützungen des Kettenglieds 70 an jeder Stirnseite des Rückenstegs 74 gebildet, wenn das Kettenglied 70 zwischen zwei gleich ausgebildeten Kettenglieders in einer geraden Anordnung eingeschlossen ist. Weiterhin dienen die ersten inneren Anlagekanten 84, 85 des Kettenglieds 70 zur Anlage stirnseitiger Abschnitte eines nicht dargestellten links zu dem Kettenglied 70 benachbarten Kettenglieds, wie sie bei 86, 87 für die nicht bezeichneten Schenkel des in Figur 11 äußerst rechten Kettenglieds 77 gezeigt sind. An den zweiten Anlagekanten 88, 89 an den Außenseiten der Stufen 79, 80 stützen sich wie dargestellt stirnseitige Abschnitte 90, 91 des benachbarten Kettenglieds 71 ab, so dass das Kettenglied 70 an insgesamt vier Anlagekanten und zwei transversalen Anlageflächen an stirnseitigen Abschnitten des Rückenstegs abgestützt ist.

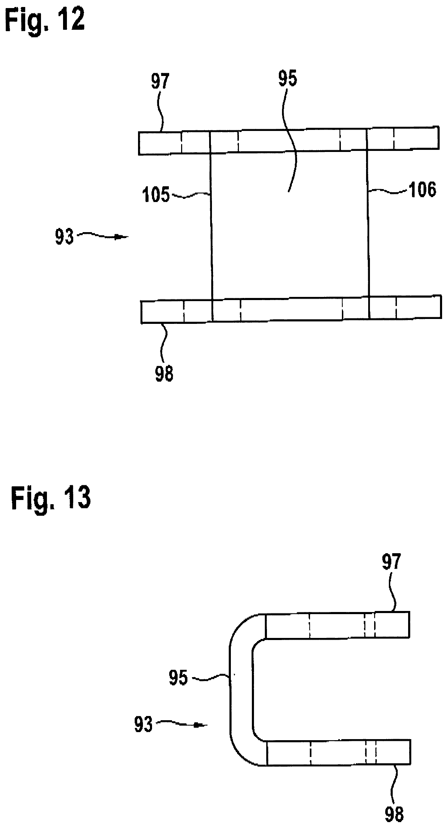

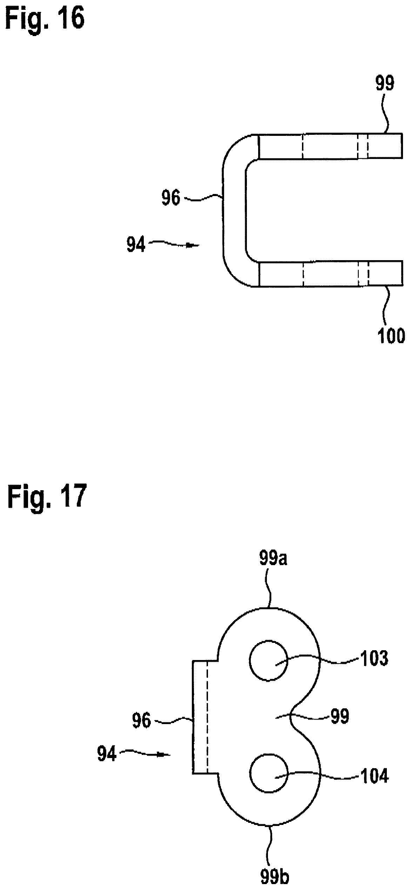

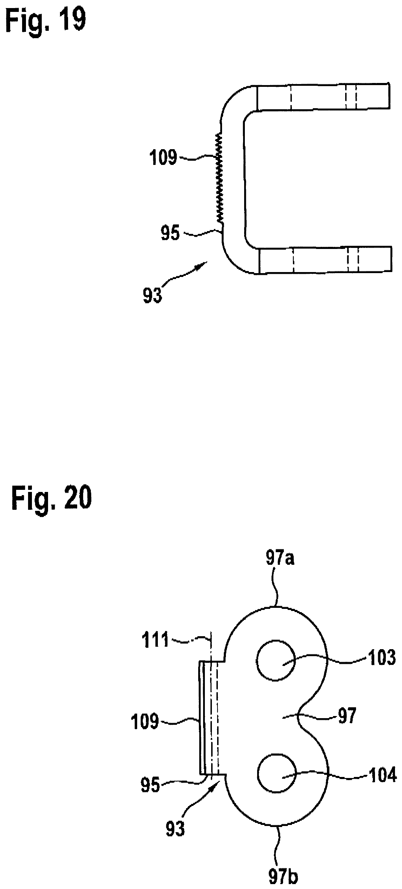

Eine Schubkette kann in einer vierten Ausführungsform mit aufeinanderfolgend schwenkbar verbundenen Kettengliedern nach den Figuren 12 bis 18, die abwechselnd als äußere Kettenglieder 93, 93', 93a, 93b und innere Kettenglieder 94, 94a, 94b dimensioniert sind und ineinandergesetzt montiert werden, ausgebildet sein. Die inneren Kettenglieder und die äußeren Kettenglieder sind, abgesehen von ihrer Dimensionierung, gleich geformt, und zwar einteilig mit einem Rückensteg 93 bzw. 94, der zwei seitliche, zueinander parallele Schenkel 97, 98 bzw. 99, 100 miteinander U-förmig verbindet bzw. überbrückt. Die Dimensionierung der äußeren Kettenglieder 93, 93', 93a, 93b und der inneren Kettenglieder 94, 94a, 94b unterscheidet sich durch die Breite des Rückenstegs, der für das äußere Kettenglied 93 in den Figuren 12 bis 14, 18, 19 bis 21 mit 95 bezeichnet ist und für das innere Kettenglied 94 gemäß den Figuren 16 bis 17 mit 96 bezeichnet ist. Entsprechend der Breite der Rückenstege 95 bzw. 96 stehen von diesen rechtwinklig im gegenseitigen Abstand parallel zueinander jeweils zwei seitliche Schenkel 97, 98 bzw. 99, 100 ab, die über einen Längsabschnitt des Kettenglieds zusammen mit dem Rückensteg 95 bzw. 96 im Querschnitt U-förmig angeordnet sind.

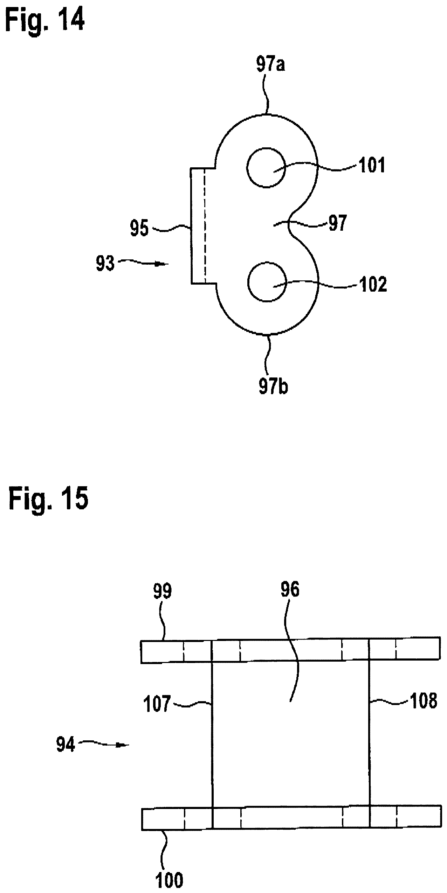

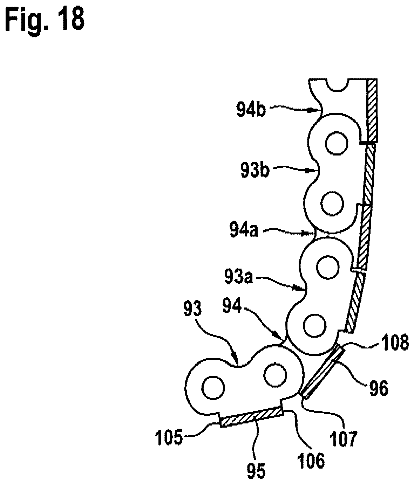

Wie insbesondere aus den Figuren 14 und 17 ersichtlich, ist die Länge der Rückenstege 95, 96 jeweils gleich dem Abstand zweier Durchgangslöcher 101, 102 für das äußere Kettenglied 93 bzw. 103, 104 für das innere Kettenglied 94 ist. Damit wird erreicht, dass scheitelseitige Stirnflächen, zum Beispiel 105, 106 des Rückenstegs 95 bzw. scheitelseitige Stirnflächen 107, 108 des Rückenstegs 94 in der montierten Schubkette gemäß Figur 18 transversale Stützflächen bilden können, an denen sich die Kettenglieder bei gerader Ausrichtung aneinander abstützen, wie in Figur 18 für das innere Kettenglied 94a und das äußere Kettenglied 93b dargestellt, die entsprechende scheitelseitige Stirnflächen wie die Kettenglieder 93, 94 aufweisen.

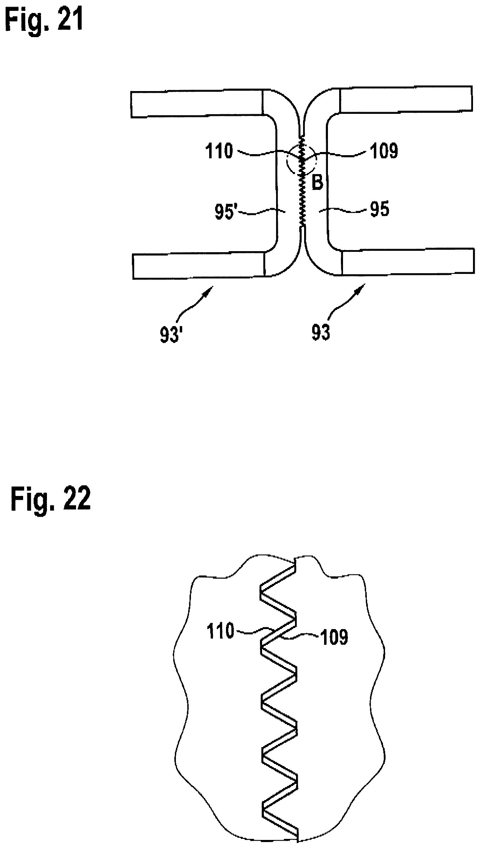

Zur Schubübertragung großer Kräfte, zu der zwei Schubketten in geraden Kettenabschnitten Rücken an Rücken angeordnet sind, wie in Figur 21 mit den Rücken 95, 95' dargestellt, sind die äußeren Oberflächen 109, 110 des Rückenstegs 95 bzw. 95' in Längsrichtung des Rückenstegs, also zu der Zeichenebene der Figur 21 senkrecht, geriffelt. Dies ist in Figur 22 schematisch vergrößert dargestellt.

Figur 22, die den Bereich B in Figur 21 an den aneinanderliegenden äußeren Oberflächen 99, 100, als Beispiel in dem Maßstab 25:1 zeigt, deutet die Riffelungen idealisiert an, die tatsächlich so beschaffen sind, dass zwar keine formschlüssige Verbindung zwischen den beiden Rückenstegen 95, 95' bestehen muss, sondern eine fertigungsgünstige Reibverbindung, also kraftschlüssige Verbindung genügt, die sich einer Querverschiebung dieser Rückenstege 95, 95' gegeneinander widersetzt.

Diese fertigungsgünstige Ausbildung der äußeren Oberflächen der Rückenstege kann auch für parallel angeordnete Schubketten in der zweiten und dritten Ausführungsform vorgesehen werden. Die parallelen Schubketten können durch einen Adapter an dem zu betätigenden Objekt und andererseits durch eine Anordnung antreibender Kettenräder sowie gegebenenfalls in dem dazwischen liegenden Abschnitt durch Führungselemente in gegenseitiger Anlage der äußeren Oberflächen der Rückenstege gehalten bzw. geführt werden.

### Bezugszeichenliste:

- 1: Kettenglied
- 1a: Kettenglied
- 2: Kettenglied
- 3, 3': Bolzen
- 4: Längsrichtung
- 4a, 4b: Durchgangsloch
- 5,5': Rückensteg
- 5a, 5a': Rückenstegabschnitt
- 6, 6': Schenkel
- 6a, 6a': gabelförmige Verlängerung
- 7, 7': Schenkel
- 7a, 7a': gabelförmige Verlängerung
- 8: Stufe
- 9: Stufe
- 10, 10': gabelförmiger Schenkelabschnitt
- 11, 11': gabelförmiger Schenkelabschnitt
- 12, 12': erster Verbindungsabschnitt
- 13, 13': erster Verbindungsabschnitt
- 14, 14': zweiter Verbindungsabschnitt
- 15, 15': zweiter Verbindungsabschnitt
- 16: Kettenrad
- 17: rückensteifer Schubkettenabschnitt
- 18: Adapter
- 19, 19': erste Stufenstützfläche
- 20, 20': erste Stufenstützfläche
- 21: zweite Stufenstützfläche
- 22: zweite Stufenstützfläche
- 23: Anlagekante
- 24: Anlagekante
- 25: Anlagekante
- 26: Anlagekante
- 29, 29': stirnseitiger Abschnitt
- 29a, 29a': abgerundeter Teilabschnitt
- 29b, 29b': gerader Teilabschnitt
- 30: stirnseitiger Abschnitt
- 31, 31': seitlicher Abschnitt
- 31a, 31a': abgerundeter Teilabschnitt
- 31b, 31b': gerader Teilabschnitt
- 32: seitlicher Abschnitt
- 32a: abgerundeter Teilabschnitt
- 32b: gerader Teilabschnitt
- 33, 33': scheitelseitige Stirnfläche
- 34, 34': scheitelseitige Stirnfläche
- 35: Rückensteg
- 36: Schenkel
- 37: Schenkel
- 38: 1. Verbindungsabschnitt
- 39: 1. Verbindungsabschnitt
- 40, 40': scheitelseitige Stirnfläche
- 41: Stufe
- 42: Stufe
- 43: 2. Verbindungsabschnitt (gabelförmiger Schenkelabschnitt)
- 44: 2. Verbindungsabschnitt (gabelförmiger Schenkelabschnitt)
- 45: Durchgangsloch
- 46: Durchgangsloch
- 47: Durchgangsloch
- 48: Durchgangsloch
- 49: 1. Anlagekante
- 50: 1. Anlagekante
- 51: 1. Anlagekante
- 52: 1. Anlagekante
- 55: gabelförmiger Schenkelabschnitt
- 56: gabelförmiger Schenkelabschnitt
- 57: stirnseitiger Abschnitt
- 58: stirnseitiger Abschnitt
- 59: stirnseitiger Abschnitt
- 60: stirnseItiger Abschnitt
- 61: gerader Teilabschnitt
- 62: gerader Teilabschnitt
- 63: gerader Teilabschnitt
- 64: gerader Teilabschnitt
- 65: abgerundeter Teilabschnitt
- 66: abgerundeter Teilabschnitt
- 67: abgerundeter Teilabschnitt
- 68: abgerundeter Teilabschnitt
- 69: Kettenglied
- 69a: Einbuchtung
- 70: Kettenglied
- 71: Kettenglied
- 72: Kettenglied
- 73: Kettenglied
- 74: Rückensteg
- 75: Rückensteg
- 76: Rückensteg
- 77: Rückensteg
- 78: Fortsatz
- 79: Stufe
- 80: Stufe
- 81: erster Verbindungsabschnitt
- 81a, 81a': gabelförmiger Schenkelabschnitt (zweiter Verbindungsabschnitt)
- 82: erster Verbindungsabschnitt
- 82a, 82a': gabelförmiger Schenkelabschnitt (zweiter Verbindungsabschnitt)
- 83: Verkürzung
- 84: 1. Anlagekante
- 85: 1. Anlagekante
- 86: stirnseitiger Abschnitt
- 87: stirnseitiger Abschnitt
- 88: 2. Anlagekante
- 89: 2. Anlagekante
- 90: stirnseitiger Abschnitt
- 91: stirnseitiger Abschnitt
- 92: Längsrichtung
- 93, 93': äußeres Kettenglied
- 93a: äußeres Kettenglied
- 93b: äußeres Kettenglied
- 94: inneres Kettenglied
- 94a: inneres Kettenglied
- 94b: inneres Kettenglied
- 95, 95': Rückensteg (außen)
- 96: Rückensteg (innen)
- 97: Schenkel
- 98: Schenkel
- 99: Schenkel
- 100: Schenkel
- 101: Durchgangsloch
- 102: Durchgangsloch
- 103: Durchgangsloch
- 104: Durchgangsloch
- 105: scheitelseitige Stirnflächen
- 106: scheitelseitige Stirnflächen
- 107: scheitelseitige Stirnflächen
- 108: scheitelseitige Stirnflächen
- 109: äußere Oberfläche des Rückenstegs
- 110: äußere Oberfläche des Rückenstegs
- 111: Längsrichtung

## Patentansprüche

1. Rückensteife Schubkette, umfassend miteinander mittels Verbindungselementen wie Bolzen (3, 3'), Stifte oder Nieten aufeinander folgend schwenkbar verbundene Kettenglieder (1, 1a, 2, 70-73) wobei im Wesentlichen sämtliche aufeinander folgend verbundene Kettenglieder (1, 1a, 2, 69; 70-73) einteilig, zumindest in einem Längsabschnitt im Querschnitt U-förmig mit einem Rückensteg (5, 5'; 35, 74-77) ausgebildet sind, von dem rechtwinklig zwei seitliche, zueinander im Wesentlichen parallele Schenkel (6, 7; 36; 37) abstehen, die über den Rückensteg (5, 5', 35, 74-77) verbunden sind und deren stirnseitige Abschnitte (29, 29', 30; 57-60, 86, 87; 90, 91) an ihren zu dem Rückensteg (5, 5'; 35; 74-77) abgewandten Enden abgerundete Teil-Abschnitte (29a, 29a) aufweisen,
so dass die abgerundeten Teil-Abschnitte der Schenkel gegenseitig abgewinkelte Positionen benachbarter Kettenglieder gestatten,
wobei die aufeinander folgend verbundenen Kettenglieder (1, 1a, 2; 70-73) aus jeweils einem gleich geformten Teil bestehen,
wobei die beiden zueinander im Wesentlichen parallelen Schenkel (6, 7; 36, 37) jeweils zwei unter Einschluss je einer Stufe (8, 9; 41, 42; 79, 80) in Längsrichtung (4; 92) des Kettenglieds nebeneinander angeordnete erste Verbindungsabschnitte (12, 13; 38, 39; 81, 82) und zweite Verbindungsabschnitte (14, 14', 15, 15'; 43, 44) aufweisen, an denen gegenseitige Abstände der beiden zueinander im Wesentlichen parallelen Schenkel (6, 7; 36, 37) unterschiedlich sind,
wobei die beiden zueinander im Wesentlichen parallelen Schenkel (6, 7; 36, 37) an ihren ersten Verbindungsabschnitten (12, 12', 13, 13'; 38, 39; 81, 82) über den Rückensteg (5, 5'; 35; 74-77) im Querschnitt U-förmig miteinander verbunden sind,
wobei die beiden zueinander im Wesentlichen parallelen Schenkel (6, 7; 36, 37) an ihren zweiten Verbindungsabschnitten (14, 14', 15, 15'; 43, 44) zusammen als gabelförmige Schenkelabschnitte (10, 10', 11, 11') ausgebildet sind und
wobei jede Stufe (8; 9; 41, 42; 79, 80) der beiden zueinander im Wesentlichen parallelen Schenkel (6, 7; 36, 37) jeweils eine erste Stufenstützfläche (19, 19'; 20, 20') bzw. Anlagekante (23, 24; 49, 50; 84, 85) auf einer innenseite der Stufe (8, 9; 41, 42; 79, 80) aufweist und eine zweite Stufenstützfläche (21, 22) bzw. Anlagekante (25, 26; 51, 52; 90, 91) auf einer Außenseite der Stufe (8, 9; 41, 42; 79, 80) aufweist.
**dadurch gekennzeichnet,**
**dass** bei abgewinkelter Ausrichtung des Kettenglieds (1 bzw. 70) zu einem unmittelbar benachbarten Kettenglied (2 bzw. 71) jeweils die abgerundeten Teilabschnitte (29a, 30a) der stirnseitigen Abschnitte (29, 30), die an den ersten Verbindungsabschnitten (12, 13 bzw. 81, 82) der zueinander im Wesentlichen parallelen Schenkel (6, 7) des Kettenglieds (1 bzw. 70) ausgebildet sind, an den ersten Stufenstützflächen (19', 20') bzw. Anlagekanten (84', 85') des benachbarten Kettenglieds (2 bzw. 71) anliegen und jeweils die abgerundeten Teilabschnitte (31a', 32a') der stirnseitigen Abschnitte (31', 32'), die an den Verbindungsabschnitten (14', 15') bzw. gabelförmigen Schenkelabschnitte (81a', 82a') des benachbarten Kettenglieds ausgebildet sind, an den zweiten Stufenstützflächen (21, 22 bzw. 90, 91) des Kettenglieds (1 bzw. 70) anliegen.

2. Rückensteife Schubkette nach Anspruch 1,
**dadurch gekennzeichnet,**
**dass** stirnseitige Abschnitte (29, 29'; 57-60) der beiden zueinander im Wesentlichen parallelen Schenkel (z.B. 6, 7) jeweils eines der Kettenglieder (1, 1a, 2; 70-73) gerade Teilabschnitte (29b, 29b'; 31b, 31b', 32b; 61-64) als seitliche Stützflächen aufweisen,
**dass** bei gerader Ausrichtung eines (1 bzw. 70) der Kettenglieder (1, 2; 70-73) zu einem unmittelbar benachbarten Kettenglied (2, 71) jeweils die geraden Teilabschnitte (29b, 30b) der stirnseitigen Abschnitte (29, 30), die an den ersten Verbindungsabschnitten (12, 13 bzw. 81, 82) des Kettenglieds (1 bzw. 70) ausgebildet sind, an den ersten Stufenstützflächen (19', 20' bzw. 84', 85') des benachbarten Kettenglieds (2 bzw. 71) anliegen und jeweils die geraden Teilabschnitte (31b', 32b') der stirnseitigen Abschnitte (31', 32'), die an den zweiten Verbindungsabschnitten (14', 15' bzw. 81a', 82a') des benachbarten Kettenglieds (2 bzw. 71) ausgebildet sind, an den zweiten Stufenstützflächen (21, 22 bzw. 90, 91) des Kettenglieds (1 bzw. 70) anliegen.

3. Rückensteife Schubkette nach einem der Ansprüche 1 oder bis 2,
**dadurch gekennzeichnet,**
**dass** die Tiefe der Stufenstützflächen (19, 19', 20, 20', 21, 22) an den beiden zueinander im Wesentlichen parallelen Schenkeln (6, 6'; 7, 7') des Kettenglieds (1, 2) quer zu dessen Längsrichtung (4) mindestens gleich der Materialtiefeder Schenkel (6, 6'; 7, 7') ist.

4. Rückensteife Schubkette nach einem der Ansprüche 1 bis 3,
**dadurch gekennzeichnet,**
**dass** die beiden zueinander im Wesentlichen parallelen Schenkel (6, 6', 7, 7') jeweils eines der Kettenglieder (1, 2; 70-73) an ihren beiden ersten Verbindungsabschnitten (12, 12', 13, 13'; 81, 82) gabelförmige Verlängerungen (6a, 6a', 7a, 7a') in Längsrichtung (4, 92) über den Rückensteg (5, 5'; 74-77) hinaus aufweisen und
**dass** sich der Rückensteg (5, 5'; 74-77) jeweils eines der Kettenglieder (1, 2; 70-73) bis zwischen deren beide gabelförmigen Schenkelabschnitte (10, 10', 11, 11;', 81a, 81a') bzw. zweite Verbindungsabschnitte erstreckt, so dass bei gerader Schubkette jeweils eine der beiden scheitelseitigen Stirnflächen (33, 33', 34, 34') beidseitig des Rückenstegs (5, 5'; 74-77) als transversale Stützfläche an einer transversalen Stützfläche eines der unmittelbar benachbarten Kettenglieder (1,2; 70-73) anliegt.

5. Rückensteife Schubkette nach einem der Ansprüche 1 bis 3,
**dadurch gekennzeichnet,**
**dass** sich der Rückensteg (35) lediglich zwischen den beiden ersten Verbindungsabschnitten (38, 39) der beiden zueinander im Wesentlichen parallelen Schenkel (36, 37) erstreckt, die einen kleineren gegenseitigen Abstand im Vergleich mit dem gegenseitigen Abstand der beiden zueinander im Wesentlichen parallelen Schenkel an deren beiden zweiten Verbindungsabschnitten (43, 44) aufweisen.

6. Rückensteife Schubkette nach einem der Ansprüche 1 bis 5,
**dadurch gekennzeichnet,**
**dass** die äußere Oberfläche (z.B. 109, 110) des Rückenstegs (z.B. 95, 95') jedes Kettenglieds (z.B. 93) in dessen Längsrichtung (111) geriffelt ist.

7. Rückensteife Schubkette nach Anspruch 1,
**dadurch gekennzeichnet,**
**dass** die aufeinander folgend schwenkbar verbundenen Kettenglieder abwechselnd als äußere Kettenglieder (93, 93', 93a, 93b) jeweils einteilig aus einem von untereinander gleich geformten ersten Teilen, die im Querschnitt U-förmig mit zwei seitlichen, zueinander parallelen Schenkeln (97, 98) und einem diese verbindenden Rückensteg(95, 95') ausgebildet sind, sowie als innere Kettenglieder (94, 94a, 94b), die ähnlich den äußeren Kettengliedern (93, 93', 93a, 93b) jeweils einteilig aus einem von untereinander gleich geformten zweiten Blechteilen, die im Querschnitt U-förmig mit jeweils zwei seitlichen, zueinander parallelen Schenkeln (98, 99) und einem diese verbindenden Rücksteg (96), der weniger breit als der Rückensteg (95) der äußeren Kettenglieder (93, 93', 93a, 93b) ist, ausgebildet sind, bestehen, und
**dass** die äußere Oberfläche (109, 110) des Rückenstegs (95, 95', 96) jedes Kettenglieds (93, 93', 93a, 93b, 94, 94a, 94b) in dessen Längsrichtung geriffelt ist.

8. Rückensteife Schubkette nach Anspruch 7,
**dadurch gekennzeichnet,**
**dass** der Rückensteg (95, 95', 96) jedes Kettenglieds (93, 93', 93a, 93b, 94, 94a, 94b) symmetrisch zu der Mitte des Kettenglieds in dessen Längsrichtung (111) ausgebildet ist und gleich lang wie der Abstand von zwei symmetrisch zu der Mitte in Längsrichtung (111) des Kettenglieds angeordneten Durchgangslöchern (101, 102, 103, 104) für ein Verbindungselement ist, so dass die scheitelseitigen Stirnflächen (106-108) der Rückenstege (95, 95', 96) unmittelbar benachbarter Kettenglieder (93, 93', 93a, 93b, 94, 94a, 94b) bei gerader Ausrichtung der Kettenglieder aneinander liegen.

9. Rückensteife Schubkette nach Anspruch 8,
**dadurch gekennzeichnet,**
**dass** sich die abgerundeten Teilabschnitte (97a, 97b) der Schenkel (97, 98) jeweils konzentrisch zu einem der Durchgangslöcher (101, 102, 103, 104) für jeweils ein Verbindungselement bis über 135° erstrecken.

10. Rückensteife Schubkette nach einem der vorangehenden Ansprüche,
**dadurch gekennzeichnet,**
**dass** das Teil, aus dem jeweils ein Kettenglied (69, 70-73; 93, 93', 93a, 93b, 94, 94a, 94b), abgesehen von den Verbindungselementen, besteht, ein Blechteil ist.

11. Rückensteife Schubkette nach Anspruch 10,
**dadurch gekennzeichnet,**
**dass** das Blechteil aus Blech gestanzt und gebogen ist.

12. Rückensteife Schubkette nach Anspruch 1,
**dadurch gekennzeichnet,**
**dass** jedes Kettenglied (1, 2) mit seinem Rückensteg (5, 5') zu seiner zu dem Rückensteg (5, 5') entgegengesetzten Seite hin gekrümmt ist.

13. Rückensteife Schubkette nach den Ansprüchen 4 und 12,
**dadurch gekennzeichnet,**
**dass** die beiden zueinander im Wesentlichen parallelen Schenkel (6, 6', 7, 7') an ihren beiden ersten Verbindungsabschnitten (12, 12', 13, 13') Verlängerungen (6a', 7a') in Längsrichtung (4) des Kettenglieds (1, 2) über den Rückensteg (5, 5') hinaus aufweisen, die parallel zueinander quer zur Längsrichtung (4) des Kettenglieds (1, 2) von dem Rückensteg (5, 5') nach außen versetzt sind.

14. Rückensteife Schubkette nach Anspruch 12 oder 13,
**dadurch gekennzeichnet,**
**dass** seitliche Abschnitte (31, 31', 32, 32') der gabelförmigen Schenkelabschnitte (10, 10', 11, 11') neben deren stirnseitigen Abschnitten parallel zueinander quer zur Längsrichtung (4) des Kettenglieds (1, 2) nach innen versetzt sind.

15. Rückensteife Schubkette nach einem der vorangehenden Ansprüche,
**dadurch gekennzeichnet,**
**dass** jeweils eine scheitelseitige Stirnfläche (33, 33', 34, 34', 40, 40', 105-108) beidseitig des Rückenstegs über dessen Breite durchgehend ausgebildet ist.

16. Rückensteife Schubkette nach einem der Ansprüche 1-9, 12-14,
**dadurch gekennzeichnet,**
**dass** das Kettenglied (1, 1a, 2; 69; 70-73; 93, 93', 93a, 93b, 94, 94a, 94b; 95, 95', 96), abgesehen von den Verbindungselementen, aus einem einzigen Kunststoffspritzteil oder Metalldruckgussteil besteht.

## Claims

1. Rigid-spine push chain, comprising chain links (1, 1a, 2, 70-73) which are successively pivotally interconnected by means of connecting elements such as bolts (3, 3'), pins or rivets, substantially all the successively connected chain links (1, 1a, 2, 69; 70-73) being formed as single pieces, so as to have a U-shaped cross section, at least in a longitudinal portion, and so as to have a connecting spine piece (5, 5'; 35, 74-77), from which connecting piece two substantially parallel lateral limbs (6, 7; 36; 37) protrude at a right angle, which limbs are connected by means of the connecting spine piece (5, 5', 35, 74-77), and the end face portions (29, 29', 30; 57-60, 86, 87; 90, 91) of which limbs comprise rounded partial portions (29a, 29a) on the ends thereof facing away from the connecting spine piece (5, 5'; 35; 74-77),
such that the rounded partial portions of the limbs allow adjacent chain links to have mutually angled positions,
the successively connected chain links (1, 1a, 2; 70-73) each consisting of an identically shaped part,
each of the two substantially parallel limbs (6, 7; 36, 37) comprising two first connecting portions (12, 13; 38, 39; 81, 82), arranged next to one another in the longitudinal direction (4; 92) of the chain link so as to enclose a shoulder (8, 9; 41, 42; 79; 80) in each case, and second connecting portions (14, 14', 15, 15'; 43, 44) on which mutual spacings of the two substantially parallel limbs (6, 7; 36, 37) are different,
the two substantially parallel limbs (6, 7; 36, 37) being interconnected at the first connecting portions (12, 12', 13, 13'; 38, 39; 81, 82) thereof by means of the connecting spine piece (5, 5'; 35; 74-77) so as to have a U-shaped cross section,
the second connecting portions (14, 14', 15, 15'; 43, 44) of the two substantially parallel limbs (6, 7; 36, 37) together being in the form of fork-like limb portions (10, 10', 11, 11') and
each shoulder (8; 9; 41, 42; 79, 80) of the two substantially parallel limbs (6, 7; 36, 37) comprising a first shoulder support surface (19, 19'; 20, 20') or a contact edge (23, 24; 49, 50; 84, 85) on an inner face of the shoulder (8, 9; 41, 42; 79, 80) in each case and comprising a second shoulder support surface (21, 22) or contact edge (25, 26; 51, 52; 90, 91) on an outer face of the shoulder (8, 9; 41, 42; 79, 80),
**characterised in that**
when the chain link (1 or 70) is oriented at an angle to a directly adjacent chain link (2 or 71), each of the rounded partial portions (29a, 30a) of the end face portions (29, 30), which are formed on the first connecting portions (12, 13 or 81, 82) of the substantially parallel limbs (6, 7) of the chain link (1 or 70), rest against the first shoulder support surfaces (19', 20') or contact edges (84', 85') of the adjacent chain link (2 or 71), and each of the rounded partial portions (31a', 32a') of the end face portions (31', 32'), which are formed on the connecting portions (14', 15') or fork-like limb portions (81a', 82a') of the adjacent chain link, rest against the second shoulder support surfaces (21, 22 or 90, 91) of the chain link (1 or 70).

2. Rigid-spine push chain according to claim 1, **characterised in that** the end face portions (29, 29'; 57-60) of the two substantially parallel limbs (e.g. 6, 7) of each chain link (1, 1a, 2; 70-73) comprise straight partial portions (29b, 29b'; 31b, 31b'; 61-64) as lateral support surfaces, and **in that**, when one (1 or 70) of the chain links (1, 2; 70-73) is oriented so as to be straight with respect to a directly adjacent chain link (2, 71), each of the straight partial portions (29b, 30b) of the end face portions (29, 30), which are formed on the first connecting portions (12, 13 or 81, 82) of the chain link (1 or 70), rest against the first shoulder support surfaces (19', 20' and 84', 85') of the adjacent chain link (2 or 71), and each of the straight partial portions (31b', 32b') of the end face portions (31', 32'), which are formed on the second connecting portions (14', 15' or 81a', 82a') of the adjacent chain link (2 or 71), rest against the second shoulder support surfaces (21, 22 or 90, 91) of the chain link (1 or 70).

3. Rigid-spine push chain according to either claim 1 or claim 2, **characterised in that** the depth of the shoulder support surfaces (19, 19', 20, 20', 21, 22) on the two substantially parallel limbs (6, 6'; 7, 7') of the chain link (1, 2), transverse to the longitudinal direction (4) of said chain link, is at least equal to the material depth of the limb (6, 6'; 7, 7').

4. Rigid-spine push chain according to any of claims 1 to 3, **characterised in that** the substantially parallel limbs (6, 6', 7, 7') of each of the chain links (1, 2; 70-73) have, on the two first connecting portions (12, 12', 13, 13'; 81, 82) thereof, fork-like extensions (6a, 6a', 7a, 7a') in the longitudinal direction (4, 92) beyond the connecting spine piece (5, 5'; 74-77), and
**in that** the connecting spine piece (5, 5'; 74-77) of each of the chain links (1, 2; 70-73) extends to between the two fork-like limb portions (10, 10', 11, 11'; 81a, 81a') or second connecting portions thereof such that, when the push chain is straight, one of the two apex-side end faces (33, 33', 34, 34') on either side of the connecting spine piece (5, 5'; 74-77) rests, in the form of a transversal support surface, against a transversal support surface of one of the directly adjacent chain links (1, 2; 70-73) in each case.

5. Rigid-spine push chain according to any of claims 1 to 3, **characterised in that** the connecting spine piece (35) extends merely between the two first connecting portions (38, 39) of the two substantially parallel limbs (36, 37), which limbs have a smaller mutual spacing by comparison with the mutual spacing of the substantially parallel limbs on the two second connecting portions (43, 44) thereof.

6. Rigid-spine push chain according to any of claims 1 to 5, **characterised in that** the external outer surface (e.g. 109, 110) of the connecting spine piece (e.g. 95, 95') of each chain link (e.g. 93) is ribbed in the longitudinal direction (111) thereof.

7. Rigid-spine push chain according to claim 1, **characterised in that** the successively pivotally connected chain links alternately consist, as outer chain links (93, 93', 93a, 93b), each as a single piece, of one part of identically shaped first parts which are formed so as to have a U-shaped cross section having two parallel lateral limbs (97, 98) and one connecting spine piece (95, 95') that connects these limbs and, similarly to the outer chain links (93, 93', 93a, 93b), as inner chain links (94, 94a, 94b), each as a single piece, of one part of identically shaped second sheet metal parts which are formed so as to have a U-shaped cross section having in each case two parallel lateral limbs (98, 99) and one connecting spine piece (96) which connects these limbs and is less wide than the connecting spine piece (95) of the outer chain links (93, 93', 93a, 93b), and **in that** the external outer surface (109, 110) of the connecting spine piece (95, 95', 96) of each chain link (93, 93', 93a, 93b, 94, 94a, 94b) is ribbed in the longitudinal direction thereof.

8. Rigid-spine push chain according to claim 7, **characterised in that** the connecting spine piece (95, 95', 96) of each chain link (93, 93', 93a, 93b, 94, 94a, 94b) is symmetrical with respect to the centre of the chain link in the longitudinal direction (111) thereof and is the same length as the distance between two through holes (101, 102, 103, 104) for a connecting element, which through holes are arranged so as to be symmetrical with respect to the centre in the longitudinal direction (111) of the chain link, such that the apex-side end faces (106-108) of the connecting spine piece (95, 95', 96) of directly adjacent chain links (93, 93', 93a, 93b, 94, 94a, 94b) rest against one another when the chain links are oriented so as to be straight.

9. Rigid-spine push chain according to claim 8, **characterised in that** the rounded partial portions (97a, 97b) of the limbs (97, 98) each extend concentrically with respect to one of the through holes (101, 102, 103, 104) for each connecting element to beyond 135°.

10. Rigid-spine push chain according to any of the preceding claims, **characterised in that** the part of which each chain link (69, 70-73; 93, 93', 93a, 93b, 94, 94a, 94b) consists, with the exception of the connecting elements, is a sheet metal part.

11. Rigid-spine push chain according to claim 10, **characterised in that** the sheet metal part is punched and bent from sheet metal.

12. Rigid-spine push chain according to claim 1, **characterised in that** the connecting spine piece (5, 5') of each chain link (1, 2) is curved towards the face thereof which is opposite the connecting spine piece (5, 5').

13. Rigid-spine push chain according to claims 4 and 12, **characterised in that** the two substantially parallel limbs (6, 6', 7, 7') comprise, on the two first connecting portions (12, 12', 13, 13') thereof, extensions (6a', 7a') in the longitudinal direction (4) of the chain link (1, 2) beyond the connecting spine piece (5, 5'), which extensions are outwardly offset from the connecting spine piece (5, 5') in parallel with one another transversely to the longitudinal direction (4) of the chain link (1, 2).

14. Rigid-spine push chain according to either claim 12 or claim 13, **characterised in that**, in addition to the end face portions thereof, lateral portions (31, 31', 32, 32') of the fork-like limb portions (10, 10', 11, 11') are inwardly offset in parallel with one another transversely to the longitudinal direction (4) of the chain link (1, 2).

15. Rigid-spine push chain according to any of the preceding claims, **characterised in that**, in each case, an apex-side end face (33, 33', 34, 34', 40, 40', 105-108) is continuously formed on either side of the connecting spine piece across the width thereof.

16. Rigid-spine push chain according to any of claims 1-9 and 12-14, **characterised in that** the chain link (1, 1a, 2; 69; 70-73; 93, 93', 93a, 93b, 94, 94a, 94b; 95, 95', 96), with the exception of the connecting elements, consists of one single injection-moulded plastics part or die cast metal part.

## Revendications

1. Chaîne de poussée à dos rigide, comprenant des maillons de chaîne (1, 1a, 2, 70 à 73) reliées entre eux à pivotement de manière à se suivre au moyen d'éléments de liaison tels que des boulons (3, 3'), des goupilles ou des rivets,
pratiquement tous les maillons de chaîne (1, 1a, 2, 69, 70 à 73) reliés de manière à se suivre étant formés d'une seule pièce avec un dos (5, 5' ; 35, 74 à 77) de manière à avoir au moins dans une partie longitudinale une forme de U en coupe transversale, deux branches latérales (6, 7 ; 36 ; 37) sensiblement parallèles entre elles faisant saillie à angle droit dudit dos, lesquelles branches sont reliées par le dos (5, 5', 35, 74 à 77) et leurs parties frontales (29, 29', 30 ; 57 à 60, 86, 87 ; 90, 91) comportant des portions (29a, 29a) arrondies à leurs extrémités opposées au dos (5, 5' ; 35, 74 à 77), de telle sorte que les portions arrondies des branches permettent des positions mutuellement inclinées de maillons adjacents,
les maillons de chaîne (1, 1a, 2 ; 70 à 73) reliées de manière à se suivre comprenant chacun une partie de même forme,
les deux branches (6, 7 ; 36, 37) sensiblement parallèles l'une à l'autre comprenant chacune deux premières parties de liaison (12, 13 ; 38, 39 ; 81, 82) disposées côte à côte avec insertion à chaque fois d'un gradin (8, 9 ; 41, 42 ; 79, 80) dans la direction longitudinale (4, 92) du maillon de chaîne et des deuxièmes parties de liaison (14, 14', 15, 15' ; 43, 44) au niveau desquelles les distances entre deux branches (6, 7 ; 36 ; 37) sensiblement parallèles l'une à l'autre sont différentes,
les deux branches (6, 7 ; 36, 37) sensiblement parallèles l'une à l'autre étant reliées entre elles au niveau de leurs premières parties de liaison (12, 12', 13, 13' ; 38, 39 ; 81, 82) par le dos (5, 5', 35') 74-77) de manière à former un U en coupe transversale,
les deux branches (6, 7 ; 36, 37) sensiblement parallèles l'une à l'autre étant formées au niveau de leurs deuxièmes parties de liaison (14, 14', 15, 15', 43, 44) conjointement comme des parties de branche fourchues (10, 10', 11, 11') et
chaque gradin (8 ; 9 ; 41, 42 ; 79, 80) des deux branches (6, 7 ; 36, 37) sensiblement parallèles l'une à l'autre comportant une première surface de support de gradin (19, 19', 20, 20') ou un premier bord d'appui (23, 24 ; 49, 50 ; 84, 85) sur un côté intérieur du gradin (8, 9 ; 41, 42 ; 79, 80) et une deuxième surface de support de gradin (21, 22) ou bord d'appui (25, 26 ; 51, 52 ; 90, 91) sur un côté extérieur du gradin (8, 9 ; 41, 42 ; 79, 80),
**caractérisé en ce que**
dans le cas où le maillon de chaîne (1 ou 70) est coudé par rapport à un maillon de chaîne (2 ou 71) immédiatement adjacent, les portions arrondies (29a, 30a) des parties frontales (29, 30), qui sont formées au niveau des premières parties de liaison (12, 13 ou 81, 82) des branches (6, 7), sensiblement parallèles l'une à l'autre, du maillon de chaîne (1 ou 70), viennent en appui sur les premières surfaces de support de gradin (19', 20') ou premiers bords d'appui (84', 85') du maillon de chaîne adjacent (2 ou 71) et les portions arrondies (31a', 32a') des parties frontales (31', 32'), qui sont formées au niveau des parties de liaison (14', 15') ou des parties de branche fourchues (81a', 82a') du maillon de chaîne adjacent, viennent en appui sur les deuxièmes surfaces de support de gradin (21, 22 ou 90, 91) du maillon de chaîne (1 ou 70).

2. Chaîne de poussée à dos rigide selon la revendication 1,
**caractérisée en ce que**
les parties frontales (29, 29' ; 57 à 60) des deux branches (par exemple 6, 7), sensiblement parallèles l'une à l'autre, de l'un des maillons de chaîne (1, 1a, 2 ; 70 à 73) comportent des portions droites (29b, 29b' ; 31b, 31b', 32b ; 61 à 64) en tant que surfaces d'appui latérales,
le cas où l'un (1 ou 70) des maillons de chaîne (1, 2 ; 70 à 73) est orientée de manière rectiligne par rapport à un maillon de chaîne immédiatement adjacent (2, 71), les portions droites (29b, 30b) des parties frontales (29, 30), qui sont formées au niveau des premières parties de liaison (12, 13 ou 81, 82) du maillon de chaîne (1 ou 70), viennent en appui sur les premières surfaces de support de gradin (19', 20' ou 84', 85') du maillon de chaîne adjacent (2 ou 71) et les portions droites (31b', 32b') des parties frontales (31', 32'), qui sont formées au niveau des deuxièmes parties de liaison (14', 15' et 81a', 82a') du maillon de chaîne adjacent (2 ou 71), viennent en appui sur les deuxièmes surfaces de support de gradin (21, 22 ou 90, 91) du maillon de chaîne (1 ou 70).

3. Chaîne de poussée à dos rigide selon l'une des revendications 1 ou 2,
**caractérisée en ce que**
la profondeur des surfaces de support de gradin (19, 19', 20, 20', 21, 22) au niveau des deux branches (6, 6', 7, 7'), sensiblement parallèles l'une à l'autre, du maillon de chaîne (1, 2), transversalement à la direction longitudinale (4) de celui-ci, est au moins égale à la profondeur matérielle des branches (6, 6' ; 7, 7').

4. Chaîne de poussée à dos rigide selon l'une des revendications 1 à 3,
**caractérisée en ce que**
les deux branches (6, 6', 7, 7'), sensiblement parallèles l'une à l'autre, de l'un des maillons de chaîne (1, 2 ; 70 à 73) comportent au niveau de leurs deux premières parties de liaison (12, 12', 13, 13' ; 82) des prolongements fourchus (6a, 6a', 7a, 7a') dans la direction longitudinale (4, 92) au-delà du dos (5, 5', 74 à 77) et
le dos (5, 5' ; 74 à 77) de l'un des maillons de chaîne (1, 2 ; 70 à 73) s'étend jusqu'entre les deux parties de branche fourchues (10, 10', 11, 11' ; 81a, 81a') ou les deux deuxièmes parties de liaison de sorte que, dans le cas d'une chaîne de poussée droite, l'une des deux surfaces frontales côté sommet (33, 33', 34, 34') situées de part et d'autre du dos (5, 5' ; 74 à 77) vient en appui, en tant que surface de support transversale, sur une surface de support transversale de l'un des maillons de chaîne immédiatement adjacents (1, 2 ; 70 à 73).

5. Chaîne de poussée à dos rigide selon l'une des revendications 1 à 3,
**Caractérisée en ce que**
le dos (35) s'étend uniquement entre les deux premières parties de liaison (38, 39) des deux branches (36, 37) sensiblement parallèles l'une à l'autre, lesquelles premières parties de liaison présentent, au niveau des deux deuxièmes parties de liaison (43, 44), une distance entre elles qui est inférieure à la distance entre les deux branches sensiblement parallèles l'une à l'autre.

6. Chaîne de poussée à dos rigide selon l'une des revendications 1 à 5,
**caractérisée en ce que**
la surface extérieure (par exemple, 109, 110) du dos (par exemple, 95, 95') de chaque maillon de chaîne (par exemple, 93) est ondulée dans la direction longitudinale (111) de celui-ci.

7. Chaîne de poussée à dos rigide selon la revendication 1,
**caractérisée en ce que**
les maillons de chaîne reliés à rotation de manière à se suivre sont formés, alternativement en tant que maillons de chaîne extérieurs (93, 93', 93a, 93b), d'une seule pièce à partir de l'une des premières parties de même forme, qui sont formées avec deux branches latérales (97, 98) parallèles entre elles. et un dos (95, 95') reliant celles-ci de manière à former un U en coupe transversales, et en tant que maillons de chaîne intérieurs (94, 94a, 94b), similaires aux maillons de chaîne extérieurs (93, 93', 93a, 93b), d'une seule pièce à partir de deuxièmes pièces de tôle de même forme qui sont formées avec deux branches latérales (98, 99) parallèles l'une à l'autre et un dos (96), qui relie celles-ci et qui est moins large que le dos (95) des maillons de chaîne extérieurs (93, 93', 93a, 93b), de façon à former un U en coupe transversale et
la surface extérieure (109, 110) du dos (95, 95', 96) de chaque maillon de chaîne (93, 93', 93a, 93b, 94, 94a, 94b) est ondulée dans la direction longitudinale de celui-ci.

8. Chaîne de poussée à dos rigide selon la revendication 7,
**caractérisée en ce que**
le dos (95, 95', 96) de chaque maillon de chaîne (93, 93', 93a, 93b, 94, 94a, 94b) est symétrique par rapport au centre du maillon de chaîne dans la direction longitudinale (111) de celui-ci et a la même longueur que la distance entre deux trous traversants (101, 102, 103, 104) disposés symétriquement par rapport au centre dans la direction longitudinale (111) du maillon de chaîne et destinés à un élément de liaison de sorte que les surfaces frontales côté sommet (106 à 108) des dos (95, 95', 96) de maillons de chaîne immédiatement adjacents (93, 93', 93a, 93b, 94, 94a, 94b) sont en appui en appui l'une sur l'autre lorsque les maillons de chaîne sont orientés de manière rectiligne.

9. Chaîne de poussée à dos rigide selon la revendication 8,
**caractérisée en ce que**
les portions arrondies (97a, 97b) des branches (97, 98) s'étendent chacune à plus de 135° concentriquement à l'un des trous traversants (101, 102, 103, 104) destinés chacun à un élément de liaison.

10. Chaîne de poussée à dos rigide selon l'une des revendications précédentes,
**caractérisée en ce que**
la partie formée d'un maillon de chaîne (69, 70 à 73, 93, 93', 93a, 93b, 94, 94a, 94b), à l'exception des éléments de liaison, est une pièce en tôle.

11. Chaîne de poussée à dos rigide selon la revendication 10,
**caractérisée en ce que**
la pièce en tôle est matricée dans une tôle et pliée.

12. Chaîne de poussée à dos rigide selon la revendication 1,
**caractérisée en ce que**
chaque maillon de chaîne (1, 2) pourvu de son dos (5, 5') est incurvé en direction de son côté opposé au dos (5, 5').

13. Chaîne de poussée à dos rigide selon les revendications 4 et 12,
**caractérisée en ce que**
les deux branches (6, 6', 7, 7') sensiblement parallèles l'une à l'autre comportent au niveau de leurs deux premières parties de liaison (12, 12', 13, 13') dans la direction longitudinale (4) du maillon de chaîne (1, 2), au-delà du dos (5, 5'), des prolongements (6a', 7a') qui sont décalés du dos (5, 5')vers l'extérieur parallèlement entre eux et transversalement à la direction longitudinale (4) du maillon de chaîne (1, 2).

14. Chaîne de poussée à dos rigide selon la revendication 12 ou 13,
**caractérisée en ce que**
des parties latérales (31, 31', 32, 32') des parties de branche fourchue (10, 10', 11, 11'), en plus de leurs parties frontales, sont décalées vers l'intérieur parallèlement entre elles et transversalement à la direction longitudinale (4) du maillon de chaîne (1, 2).

15. Chaîne de poussée à dos rigide selon l'une des revendications précédentes,
**caractérisée en ce que**
une surface frontale côté sommet (33, 33', 34, 34', 40, 40', 105 à 108) des deux côtés dos est conçue pour être continue sur la largeur dudit dos.

16. Chaîne de poussée à dos rigide selon l'une des revendications 1 à 9, 12 à 14,
**caractérisée en ce que**
le maillon de chaîne (1, 1a, 2 ; 69, 70 à 73, 93, 93', 93a, 93b, 94, 94a, 94b, 95, 95', 96) est formé, à l'exception des éléments de liaison, à partir d'une unique pièce en matière plastique moulée par injection ou d'une pièce métallique coulée sous pression.
